# EUROPÄISCHE PATENTSCHRIFT

(11) **EP 2 030 062 B1**
(45) Veröffentlichungstag und Bekanntmachung des Hinweises auf die Patenterteilung: **15.09.2010**
(21) Anmeldenummer: 07785823.1
(22) Anmeldetag: 15.06.2007
(51) Int. Cl.: G02B 21/24

(54) **AUTOFOKUSEINRICHTUNG FÜR DIE MIKROSKOPIE**
AUTOFOCUS DEVICE FOR MICROSCOPY
DISPOSITIF DE MISE AU POINT AUTOMATIQUE POUR LA MICROSCOPIE

(30) Priorität: 16.06.2006 DE 102006027836
(43) Veröffentlichungstag der Anmeldung: 04.03.2009
(73) Patentinhaber: Carl Zeiss MicroImaging GmbH, 07745 Jena (DE)
(72) Erfinder: WESTPHAL, Peter, 07743 Jena (DE); BUBLITZ, Daniel, 07743 Jena (DE); MITZKUS, Reiner, 37085 Göttingen (DE)
(74) Vertreter: Geyer, Fehners & Partner
(86) Internationale Anmeldenummer: PCT/EP2007/005309
(87) Internationale Veröffentlichungsnummer: WO 2007/144197

(56) Entgegenhaltungen:
- WO-A-03/060587
- WO-A-2004/097493
- DE-A1- 3 728 257
- DE-A1- 10 112 639
- GB-A- 2 313 508
- US-A- 5 239 170

## Beschreibung

Die Erfindung bezieht sich auf ein Mikroskop gemäß dem Oberbegriff des Anspruchs 1, mit einem eine Probe entlang eines Mikroskopstrahlenganges abbildenden Objektiv und einer Autofokuseinrichtung, welche über einen Strahlteiler in den Mikroskopstrahlengang eingespiegelt ist.

Um mittels einer Abbildungsoptik präzise Abbildungen einer Probe bzw. eines Probenschnitts zu erhalten, ist es erforderlich, die Probe exakt in die Fokusposition des Objektivs zu stellen. Ist die Abbildung unscharf, ist es wichtig zu erfahren, um welchen Betrag und in welcher Richtung eine Lageveränderung der Probe relativ zur Abbildungsoptik bzw. zum Objektiv zu veranlassen ist und gegebenenfalls entsprechende Stellbefehle abzuleiten, die zu einer Nachfokussierung genutzt werden können. In diesem Zusammenhang sind im wesentlichen Triangulationsverfahren, abbildende Verfahren mit Kontrastauswertung und die Positionsbestimmung mittels schräg gestellter konfokaler Spaltblende bekannt. Bei Triangulationsverfahren wird ein kollimierter Laserstrahl in die Pupillenebene eines Objektives eingespiegelt und aus dem Verlauf dieses Laserstrahls relativ zum Abbildungsstrahlengang auf die z-Position des von der Probe reflektierten Laserlichts geschlossen. Bei der Abbildung des Laserlichts In unterschiedlich tief gelegene Ebenen der Probe treten jedoch Bildfehler auf, so daß die Autofokusgüte über einen gegebenen Tiefenschärfebereich stark variiert Auch sind Schwankungen dahingehend festzustellen, ob das Meßergebnis vom Zentrum oder am Rand der Probe bzw. des verwendeten Detektors ermittelt wird. Üblicherweise wird ein Triangulationsverfahren deshalb iterativ ausgeführt, was verhältnismäßig zeitraubend ist.

Bei abbildenden Verfahren mit Kontrastauswertung wird die Probe mit einer bestimmten Intensitätsverteilung beleuchtet meist indem in eine Feldblendenebene eines Beleuchtungsstrahlengangs ein Gitter gestellt wird. Man nimmt eine Serie von Bildern mit unterschiedlichen Abständen zwischen Abbildungsoptik und Probe auf und ermittelt in dieser Serie das Bild mit dem höchsten Kontrast, dem dann der optimale Fokusabstand zugeordnet ist. Nachteilig hieran ist, daß zur Aufnahme der Bildserie verschiedene z-Positionen mit hoher Genauigkeit angefahren werden müssen, was wiederum zeitraubend ist. Beispiele für eine Autofokuseinrichtung mittels Kontrastanalyse eines auf eine Probe projizierten Musters finden sich in der US 5604344 oder der US 6545756.

Aus der US 5 239 170 ist es bekannt, einen schräggestellten Draht in das Probevolumen abzubilden und dieses Bild auszuwerten. Diese Druckschrift wurde im Oberbegriff des Hauptanspruches berücksichtigt.

Bei der Positionsbestimmung mittels schräg gestellter konfokaler Spaltblende wird in eine Feldblendenebene des Beleuchtungsstrahlengangs eine Spaltblende gestellt und auf die Probe abgebildet. Das von der Probe reflektierte Licht wird auf eine relativ zur Spaltblende geneigt angeordnete CCD-Zeile gerichtet und es wird die Position auf der CCD-Zeile bestimmt, an dem das reflektierte Licht ein Maximum hat. Dieses Verfahren ist sehr schnell, hat allerdings Probleme mit Verunreinigungen auf der Probe oder Probenoberfläche, die zu Intensitätsschwankungen führen können. Auch ist ein sehr großer Justieraufwand bei der Abbildung des Spaltes auf die CCD-Zeile aufzubringen, denn der Spalt muß, um eine hohe Genauigkeit erreichen zu können, sehr schmal sein. Eine Verbesserung der Positionsbestimmung mittels schräggestellter konfokater Spaltblende ist in der DE 10319182 A1 geschildert.

Allen Verfahren ist gemein, daß sie die Fokusebene zwar sehr genau finden können, jedoch die Lage dieser Fokusebene innerhalb der Probe, insbesondere bezüglich weiterer Grenzflächen, nur eingeschränkt zu ermitteln erlauben.

Oftmals möchte man jedoch nicht nur die Meßebene exakt finden, sondern auch deren Lage, d. h. deren Abstand zu einer Referenzebene ermitteln. Ein Bezug auf eine als Referenzebene dienende Grenzfläche kann dabei im Stand der Technik entweder dadurch erfolgen, daß eine zweite Autofokuseinrichtung verwendet wird, die auf die Grenzfläche fokussiert wird. Das erhöht natürlich den optischen Aufwand, und meist muß man einen Bereich der Detektions- bzw. Beleuchtungsapertur für diesen zusätzlichen Autofokus reservieren. Mehrere Autofokusstrahlengänge zu verwenden, ist beispielsweise in der WO 00/43820 beschrieben. Zum anderen ist es im Stand der Technik bekannt, für kurze Zeit die Messung zu unterbrechen und durch eine Fokusverstellung die Autofokuseinrichtung auf die gewünschte Referenzebene einzustellen. Der Betrag der Fokusverstellung stellt dann ein Maß für den Abstand der Meßebene zur Referenzebene dar. Nachteilig ist dabei, daß die eigentliche mikroskopische Messung für die Bestimmung des Abstandes zur Referenzebene unterbrochen werden muß.

Die gleiche Problemstellung ergibt sich, wenn in einer Probe ein Objekt, das an unterschiedlichen z-Positionen liegen kann, gefunden oder verfolgt werden soll. Ein solches Objekt kann z. B. eine in einer Probe befindliche Zelle sein, die sich in der Probe (z B. in einer flüssigen Lösung) bewegt.

Die DE 10 112 639 A1 beschreibt ein Verfahren, das mit einem schräg gestellten Detektor Aufnahmen einer biologischen Probe erfaßt und einen Ort mit maximalem mittlerem Kontrast als Maß für die Fokusposition bestimmt. Dabei sind Mattscheiben im Autofokus-Strahlengang erforderlich.

Der Erfindung liegt also die Aufgabe zugrunde, ein Mikroskop mit einer Autofokusvorrichtung anzugeben, mit der nicht nur die Lage der Meßebene exakt bestimmt werden kann, sondern zugleich auch der Abstand zu einer Referenzebene erfaßbar oder ein Objektracking oder -finder möglich ist. Insbesondere sollte eine separate Autofokusvorrichtung, die nur zur Bestimmung der Referenzebene vorgesehen ist, und/oder ein wiederholtes Verstellen der Fokuslage in z-Richtung vermieden werden.

Diese Aufgabe wird gelöst durch ein Mikroskop gemäß Anspruch 1, mit einem Objektiv, das eine in einem Probenvolumen liegende Fokusebene hat, und mit einer Autofokuseinrichtung, die aufweist: einen Lichtmodulator zur Erzeugung eines leuchtenden, intensitätsmodulierten Modulationsobjektes, eine Autofokus-Beleuchtungsoptik, die das leuchtende Modulationsobjekt in die Fokusebene des Objektives abbildet, so daß im Probevolumen ein Bild des Modulationsobjektes entsteht, wobei die Abbildung des Modulationsobjektes über einen Strahlteiler erfolgt, der den Strahlengang der Autofokus-Beleuchtungsoptik in den Mikroskopstrahlengang einspiegelt, eine Kamera zur Aufnahme eines zweidimensionalen Bildes, die eine Kamera-Bildebene aufweist, und eine Autofokus-Abbildungsoptik, die das im Probevolumen liegende Bild des Modulationsobjektes in eine Autofokus-Bildebene abbildet, wobei die Kamera-Bildebene die Autofokus-Bildebene schneidet.

Die Erfindung sieht also ein Mikroskop vor, mit einem eine Probe entlang eines Mikroskopstrahlenganges abbildenden Objektiv und einer Autofokuseinrichtung, die einen Autofokusstrahlengang, welcher über einen Strahlteiler in den Mikroskopstrahlengang eingekoppelt ist und der aufweist:
- einen Lichtmodulator zur Erzeugung eines leuchtenden zweidimensionalen, intensitätsmodulierten Modulationsobjektes das im Autofokusstrahlengang in einer zur Fokusebene des Objektives konjugierten Ebene liegt und in die Fokusebene des Objektives abgebildet ist, und
- eine Kamera zur Aufnahme eines zweidimensionalen Bildes, auf die der Autofokusstrahlengang das in der Probe liegende Bild des Modulationsobjektes abbildet, wobei die Bildebene der Kamera eine zum Modulationsobjekt konjugierte Ebene schneidet und die Kamera den Kontrast des in der Probe fliegenden Bildes des Modulationsobjekt erfaßt,
- wobei die Bildebene der Kamera schräg zur optischen Achse des Autofokusstrahlenganges liegt.

Die Erfindung sieht vor, daß ein zweidimensionates Modulationsobjekt, z. B. durch Beleuchtung eines entsprechenden Lichtmodulators (Gitter, LCD oder DMD), erzeugt und in den Mikroskopstrahlengang, z. B. den Beleuchtungsstrahlengang, eingespiegelt wird, um eine strukturierte Autofokus-Beleuchtung der Probe zu erreichen. Die strukturierte Beleuchtung erfolgt dabei über eine separate Lichtquelle, die von der Beleuchtungsquelle unabhängig ist, vorzugsweise über LED. Natürlich sind beliebige Weißlicht- oder farbige Beleuchtungsquellen möglich. Dabei strahlt das zweidimensionale Beleuchtungsobjekt in einem Spektralbereich, der bei der Probenabbildung nicht benötigt wird. Zusätzlich wird an einer Stelle eine zweidimensionale Kamera (z. B. CCD oder CMOS) in den Strahlengang eingefügt. Verschiedene Orte sind hier möglich. Die Kamera liegt schräg zur optischen Achse. Dadurch kann eine Dimension der Kamera einem gewissen Tiefenbereich und somit verschiedenen Fokusebenen zugeordnet werden. Ober die Wahl der Schräglage kann der erfaßte Tiefenbereich eingestellt werden. Ziel ist es, die Lage einer rückstreuenden oder reflektierenden (d.h. spiegelnden) Grenzfläche an, in oder bei der Probe und/oder die Lage einer Probe mit Eigenkontrast zu bestimmen.

Das Modulationsobjekt moduliert räumlich und kann bei Verwendung eines verstellbaren Lichtmodulators auch zusätzlich zeitlich modulieren. Eine zeitliche Modulation ist eine Alternative zu einer spektralen Trennung, um die Beleuchtung durch das Modulationsobjekt von der übrigen Mikroskopbeleuchtung zu unterscheiden. Hierbei ist vorzugsweise die Erfassung der Autofokusabbildung zur zeitlichen Modulation synchronisiert, z. B. kann eine Lock-In-Technik zum Einsatz kommen. Um die Probenabbildung möglichst nicht zu stören, erfolgt vorzugsweise die zeitliche Modulation mit so hoher Frequenz, daß sie bei visueller Beobachtung im Mikroskop, z. B. durch ein Mikroskopokular nicht wahrnehmbar ist. Ein möglicher Frequenzbereich liegt oberhalb der Bildverschmelzungsfrequenz des Auges, die im helladaptierten Zustand etwa 50 Hz beträgt, beispielsweise zwischen 50 und 200 Hz ist ein möglicher Bereich.

Die Ein- und Auskopplung der strukturierten Beleuchtung sowie der Abbildung der strukturiert beleuchteten Probe auf die Kamera kann vorteilhafterweise mit Teilerspiegeln erfolgen, die nur einen geringen Einfluß auf den übrigen Mikroskopstrahlengang haben, z. B. durch einen hohen Transmissionsgrad (ca. 95 % und höher sind möglich). Besonders bevorzugt ist eine dichroitische Trennung in Kombination mit spektral separierter Autofokusstrahlung. Weiter ist es günstig, die/den Teiler einseitig zu entspiegeln, um den übrigen Mikroskopstrahlengang möglichst gering zu beeinflussen. Natürlich kann bei Bedarf der Reflexionsgrad aber auch auf Kosten des Transmissionsgrades erhöht werden. Arbeitet das Autofokussystem z. B. mit einer infraroten (NIR)-Beleuchtungsquelle, so ist vorzugsweise der dichroitischer Strahlteiler natürlich so ausgebildet, daß er die Autofokus-Strahlung mit hoher Effizienz im Autofokus-Strahlengang führt oder aus-/und einkoppelt.

Durch die Abbildung des Modulationsobjekts erfolgt eine periodische Beleuchtung, z.B. Streifenbeleuchtung, bei der das Modulationsobjekt dann ein Streifenmuster ist. Auf der Kamera erscheint dann ein entsprechendes periodisches Muster, z.B. ein Streifenmuster, dessen Kontrast in der zur aktuellen Fokusebene konjugierten Ebene maximal ist. Hierdurch läßt sich ein sehr zuverlässiges und genaues Autofokussystem für Grenzflächen an der Probe (z. B. Gla/wasser, Glas/Luft oder Wasser/Luft) realisieren. Bei einem zweidimensionalen Lichtmodulator kann mittels der zweitem Dimension der Kamera redundante Informationen erhalten werden, wodurch vorzugsweise über Mittelung mehrerer Zeilensignale ein sehr robustes Autofokussignal entsteht.

Um möglichst geringe Einflüsse durch die Abbildung des Modulationsobjektes in die Probe zu erzeugen, ist bevorzugt die Struktur eines räumlich modulierten Modulationsobjektes in schneller Folge (z. B. mit größer als 30 Hz) alternierend lateral verschoben. Eine weitere Möglichkeit, die ebenfalls bei einem verstellbaren Lichtmodulator gegeben ist, besteht darin, immer oder zeitweise (z. B. nach Auffinden eines zu mikroskopierenden Objektes) nur noch bestimmte Teil-Bereiche des vom Objektiv erfaßten Objektfeldes/Probenvolumens auszuleuchten. Hierdurch kann der Bildkontrast für den Autofokus bzw. die Meßobjektnachfühnrng, gegebenenfalls aber auch für die normale Mikroskopdetektion erhöht werden.

Wesentlich für die Erfindung ist, daß die Kamera-Bildebene schräg zur Bildebene der Autofokus-Abbildungsoptik steht. Die Schrägstellung kann dadurch erreicht werden, daß die Kamera schräg zur

Durch Verwendung mehrerer Kameras ist auch ein dreidimensionales Bildobjektnachführungs- bzw. Autofokus-System möglich. Dann kann zusätzlich eine zweite Kamera senkrecht zur optischen Achse stehen, und eine dritte ist um eine Kippachse gedreht, die nicht mit der Kippachse der ersten Kamera zusammenfällt.

Die strukturierte Autofokus-Beleuchtung kann natürlich im Durchlicht und/oder in Dunkelfeldbeleuchtung realisiert werden. Im Durchlichtbetrieb wäre die Anwendung dann allerdings auf transparente Probenträger eingeschränkt.

Bei allen Varianten des Mikroskops ist es vorzuziehen, eine rechnerische Auswertevorrichtung zu verwenden, die die Signalauswertung der Kamera(s) vornimmt, einen gegebenenfalls verstellbaren Lichtmodulator ansteuert und die Steuerung von gegebenenfalls vorhandenen mechanischen Stelleinheiten am Mikroskop (z. B. zur Fokusverstellung, zu x-y-Verstellung, zum Einschwenken und/oder Einschalten von Filtern etc.) vornimmt. Auswertung und Steuerung können sowohl schaltungs- als auch softwaretechnisch implementiert werden. Das Autofokussystem der Erfindung wird im Betrieb natürlich von einem Steuergerät gesteuert, das die rechnerische Auswertevorrichtung umfaßt und hier erläuterten Maßnahmen einleitet, um die beschriebene Vorgehensweise zu realisieren. Bei dem Steuergerät kann es sich um ein ohnehin im Mikroskop vorgesehenes Steuergerät handeln.

Für stark lichtstreuende Oberflächen ist eine Weiterbildung der Erfindung möglich, die das von der Probe reflektierte bzw. gestreute Licht analysiert. Hier ist es vorgesehen, daß sowohl Kamera als auch Modulationsobjekt gegenüber der optischen Achse verkippt sind. Beide liegen in zueinander konjugierten Ebenen. Der Kippwinkel ist vorzugsweise gleich. Es wird von der Probe gestreutes oder reflektiertes Licht moduliert auf die Kamera abgebildet. Die Stärke der Modulation liefert Strukturinformationen über die Probe und kann für Autofokus und/oder Bildobjektnachführungszwecke verwendet werden. Aufgrund der Schrägstellung von Modulationsobjekt und Kamera erhält man simultan Strukturinformation aus verschiedenen Tiefen (z-Positionen der Fokusebene des Objektives) der Probe.

In ungünstigen Fällen kann die Lichtmodulation, die auf der Kamera nachgewiesen wird, d. h. das Bild des in die Probe abgebildeten Objektes, durch Speckte-Effekte beeinträchtigt werden. Für derartige Zwecke kann es vorteilhaftig sein, die Probe oder das Modultionsobjekt und/oder ggf. die diese beleuchtende Lichtquelle gleichförmig oder periodisch zu bewegen, um Speckle-Muster herauszumitteln. Alternativ ist auch ein synchrones Bewegen von Modulationsobjekt und Kamera möglich.

Prinzipiell können weitere Kameras eingespiegelt werden, die Strukturinformationen von der Probe ableiten. Diese Kameras sind dann so angeordnet, daß auf Ihnen unterschiedliche Schnittebenen der Probe abgebildet werden, d. h. die Kameras sind mit unterschiedlichen Kippwinkeln zur optischen Achse bzw. unterschiedlichen Drehwinkeln um die optische Achse angeordnet.

Zur Erhöhung des Autofokus-Fangbereiches in z-Richtung kann zusätzlich noch eine Kamera in einer zum Lichtmodulator nicht-konjugierten Ebene angebracht sein. Durch den entsprechenden Verkippwinkel läßt sich der Fangbereich einstellen. Das Schrägstellen einer nicht-konjugiert angeordneten Kamera ist äquivalent zu einem geänderten Winkel, den das Modulationsobjekt mit der optischen Achse einschließt. Da dieser Winkel jedoch aus praktischen Gründen wegen sphärischen Bildfehlern und Reflexionsverlusten kaum kleiner als 30° gewählt werden kann, ergibt sich durch eine solche weitere Kamera die Möglichkeit den Fangbereich der Autofokuseinrichtung zu erhöhen.

Das Mikroskop kann insbesondere als inverses Mikroskop ausgebildet sein, wie es z. B. zum Auslesen von Titerplatten verwendet wird, die nach oben geöffnete Küvetten mit Flüssigkeiten besitzen. Zu Fokussieren ist hier regelmäßig auf die Glas/Flüssigkeits-Grenzfläche des Titerplattenbodens, an der meist Zellen haften. Da solche Zellen den Kontrast des abgebildeten Modulationsobjektes beeinträchtigen, wird vorzugsweise über mehrere Zeilen der zweidimensionalen Kamera gemittelt, um die Meßgenauigkeit zu verbessern.

Zwischen Objektiv und Titerplattenboden kann Luft oder eine Immersionsflüssigkeit angeordnet werden. Ohne Immersionsflüssigkeit erzeugt die Luft/Glas-Grenzfläche am Titerplattenboden den höchsten Kontrast. Mit Immersionsflüssigkeit erhält man den stärksten Kontrast von der Grenzfläche zwischen Küvettenflüssigkeit und Titerplattenboden-Oberseite.

Eine besonders gute Anpassung an verschiedene Proben ist gegeben, wenn der Lichtmodulator ansteuerbar und zur Erzeugung eines räumlich oder zeitlich intensitätsmodulierten Modulationsobjektes ausgebildet ist. Diese Ansteuerbarkeit kann dadurch erreicht werden, daß als Lichtmodulator ein beleuchtetes LCD- oder DMD-Element verwendet wird. Die dabei eingesetzte Wellenlänge unterscheidet sich vorzugsweise von der normalen Beleuchtungsstrahlung im Mikroskop. Prinzipiell kann die Autofokuseinrichtung hinsichtlich des Lichtmodulators und/oder der Kamera in den Beleuchtungsstrahlengang eines Auflicht-Mikroskopes eingekoppelt werden. Alternativ ist eine Einstrahlung parallel zum Auflichtbeleuchtungsstrahlengang in den Mikroskopstrahlengang möglich, d. h. im Mikroskopstrahlengang befindet sich ein eigener Strahlteiler für den Autofokusstrahlengang. Dann kann Strahlung verwendet werden, die bezüglich Ihrer Wellenlänge oberhalb der für die Mikroskopiervorgänge verwendeten Wellenlängen liegt, da nicht auf die möglicherweise dichroitischen Eigenschaften des Beleuchtungs-Strahlenteilers im Mikroskop Rücksicht genommen werden muß - die Autofokuseinrichtung ist über einen eigenen Strahlenteiler eingebunden. Bei der Fluoreszenzmikroskopie sind für die Autofokus-Beleuchtung Wellenlängen oberhalb 800 nm bevorzugt, da dann für Fluoreszenz- oder Durchlichtmessungen keine nennenswerten Einschränkungen zu befürchten sind. Durch einen geeigneten Spektralfilter vor der Kamera der Autofokuseinrichtung kann potentiell störende Strahlung der Mikroskopbeleuchtung effektiv unterdrückt und bei der Autofokuseinrichtung ausgeblendet werden. Für die simultane Anwendung des Autofokus bei 2-Photonen-Mikroskopie wird der Strahlteiler so ausgelegt, daß er nur einen schmalen Wellenlängenbereich, z.B. 20 nm, der sich nicht mit der 2-Photonen-Anregungsstrahlung überschneidet, reflektiert. Grundsätzlich kann jedoch auch der gesamte sichtbare Bereich und UV für die Autofokusfunktion verwendet werden.

Eine besonders einfache Analyse des in die Probe abgebildeten Modulationsobjektes erhält man, da das abgebildete Modulationsobjekt eine periodische Struktur, z. B. eine Streifengitterstruktur aufweist. Der Lichtmodulator ist also entsprechend ausgebildet.

Zweckmäßigerweise wird man die Autofokuseinrichtung in den Strahlengang des Mikroskops über einen Strahlteiler einspiegeln, wobei zugleich die Abbildung des Modulationsobjektes, wie auch die Rück-Abbildung des abgebildeten Modulationsobjektes auf die Kamera über denselben Strahlteiler eingekoppelt ist. Der Aufbau ist dann besonders einfach an ein bestehendes Mikroskop anzupassen. Dies ist jedoch nicht zwingend.

Der Winkel der Schrägstellung von Bildebene der Kamera bzw. Modulationsobjekt zur optischen Achse stellt den Fangbereich bzw. Tiefenbereich ein, in dem die Autofokuseinrichtung arbeitet. Ein Winkel zwischen 20° und 70° ist zweckmäßig. Wie bereits erwähnt, kann man mehrere Kameras verwenden, deren Bildebenen zueinander, insbesondere unterschiedlich, geneigt sind.

Wie bereits erwähnt, gibt es verschiedene Mittel, um das Bild des Modulationsobjektes von der Probenabbildungsstrahlung zu trennen, bzw. unterscheidbar zu machen. Der verwendete Ansatz ist eine spektrale Trennung. Das Bild des Modulationsobjektes liegt in einem Spektralbereich, der bei der Probenabbildung nicht verwendet oder benötigt wird. Die Abbildung des Modulationsobjektes in die Probe sowie die Abbildung dieses Bildes bzw. der in der Probe erzeugten Reflexe auf die Kamera erfolgt dann über geeignete dichroitische Strahlteiler bzw. einen zentralen dichroitischen Strahlteiler. Ein Zusätzlich mögliches Mittel stellt eine zeitliche Modulation des Lichtmodulators dar, in Kombination mit geeigneter synchronisierter Erfassung des Bildes des Modulationsobjektes. Um Einflüsse der Autofokuseinrichtung auf die normale Probenabbildung zu vermeiden ist es vorteilhaft, in diesem Fall eine Variation der räumlichen Modulation vorzusehen, so daß beispielsweise ein in die Probe abgebildetes Streifengitter über die Zeit gemittelt nicht in der Probe sichtbar ist, soweit man nicht synchronisiert zu zeitlichen Veränderung erfaßt, wie es bei der Kamera des Autofokusstrahlengangs dann der Fall ist.

Bei der spektrale Separierung von Autofokusstrahlung und Probenabbildungsstrahlung ist es natürlich vorteilhaft, die Spektralbereiche der Probenabbildungsstrahlung im Autofokusstrahlengang möglichst zu unterdrücken. Etwaige Anteile, die also z. B. einen dichroitischen Strahlteiler passieren und damit noch in den Autofokusstrahlengang gelangen, werden durch geeignete Filter unterdrückt. Eine besonders gute Filterung ist möglich, wenn das in der Probe liegende Bild des Modulationsobjektes unter Einschaltung einer Zwischenabbildung auf die Kamera abgebildet wird. Dann besteht ausreichend Bauraum, um Sperrfilter einzusetzen.

Eine weitere Unterdrückung von störender Strahlung erreicht man, wenn man an dem Strahlteiler, der im Autofokusstrahlengang die Beleuchtung, d. h. die Abbildung des Modulationsobjektes in die Probe, von der Detektion d. h. die Abbildung des in der Probe liegenden Bildes auf die Kamera trennt, eine Strahlungsfalle vorsieht, die an diesem Strahlteiler transmittierte Strahlung die nicht weiter verwertet wird, absorbiert.

Die Verwendung einer Zwischenabbildung hat weiter den erheblichen Vorteil, das zwischen dem Strahlteiler, der Autofokusbeleuchtung und Autofokusdetektion trennt, ein großer Abstand zu detektierenden Kamera besteht. Unvermeidbares Streulicht vom Strahlteiler gelangt so nur noch über Mehrfachreflexionen, d. h. stark abgeschwächt, zur Kamera. Durch die Verwendung einer Zwischenabbildung werden darüber hinaus noch Reflexe von Optiken die zwischen dem Strahlteiler und der Kamera liegen, unterdrückt.

Die Erfindung wird nachfolgend unter Bezugsnahme auf die Zeichnung beispielhalber noch näher erläutert.

Es versteht sich, das die vorstehend genannten sowie auch die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Die Erfindung wird nachfolgend unter Bezugnahme auf die Zeichnung beispielhalber noch näher erläutert. Es zeigen:
- Fig. 1: ein Mikroskop mit einer Autofokuseinrichtung für Reflexionsmessungen,
- Fig. 2: ein Mikroskop mit einer Autofokuseinrichtung für Fluoreszenünessungen,
- Fig. 3: ein Mikroskop ähnlich dem der Fig. 1, adaptiert für streuende Proben, wobei dieses Mikroskop nicht Teil der beanspruchten Erfindung ist,
- Fig. 4: ein Mikroskop ähnlich dem der Fig. 1 mit einem erhöhten Fangbereich, wobei dieses Mikroskop nicht Teil der beanspruchten Erfindung ist,
- Fig. 5: ein inverses Mikroskop mit einer Autofokuseinrichtung mit Einspiegelung der Beleuchtung zwischen Objektiv und Filterwürfel und
- Fig. 6: ein inverses Mikroskop mit einer Autofokuseinrichtung mit Einspiegelung im Mikroskopbeleuchtungsstrahlengang.
- Fig. 7: ein Mikroskop ähnlich dem der Fig. 6, mit einer Autofokuseinrichtung, welche einer Kamera eine Zwischenabbildungsoptik vorgeordnet ist,
- Fig. 8: eine Draufsicht auf einen exemplarischen Lichtmodulator, und
- Fig. 9 bis 11: Kontrastsignale, die von einer Kamera der Autofokuseinrichtung abgegeben werden.

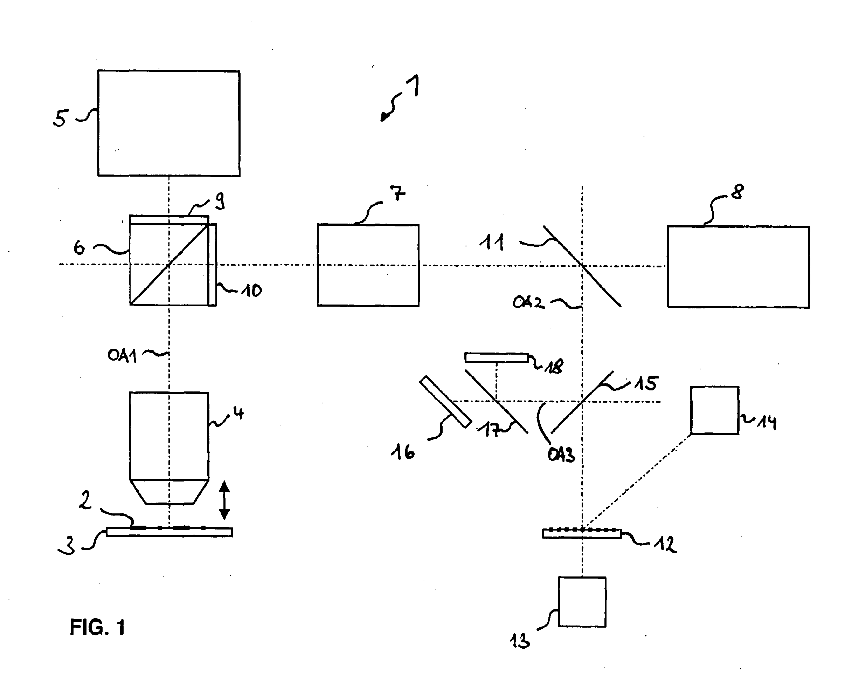

Fig. 1 zeigt ein Mikroskop 1, mit dem eine Probe 2, die sich auf einem Probenträger 3 befindet mittels eines Objektivs 4 auf einen Detektor 5 abgebildet wird. Die Darstellung in Fig. 1 ist dabei stark vereinfacht. Bei dem Mikroskop 1 kann es sich um ein Weitfeldmikroskop handeln, d. h. der Detektor 5 ist z.B. eine Kamera oder ein Okulareinblick. Aber auch jede andere Mikroskopbauweise kommt für das Mikroskop 1 in Frage, beispielsweise ein Laser-Scanning-Mikroskop. Dann ist dem Mikroskopstrahlengang noch eine Scananordnung vorgesehen, die auf der optischen Achse OA1 liegt. Das Objektiv 4 ist in seiner Fokuslage verstellbar, wie der Doppelpfeil andeutet. Alternativ kann auch der Probenträger 3 verstellbar sein.

An einem Strahlteiler 6, der gegebenenfalls als Dichroit oder als plattenförmiger Farbteiler ausgebildet sein kann, ist Mikroskop-Beleuchtungsstrahlung aus einer Mikroskop-Beleuchtungsquelle 8 eingekoppelt, die über eine Beleuchtungs-Tubusoptik 7 die Probe 2 durch das Objektiv 4 beleuchtet. In diesen Beleuchtungsstrahlengang ist mittels eines Strahlteilers 11 eine Autofokuseinrichtung eingekoppelt. Die Autofokuseinrichtung verfügt über einen Lichtmodulator 12, der von einer Lichtquelle 13, beispielsweise eine LED, für Transmissionsbetrieb oder von einer Lichtquelle 14 (z.B. eine LED) für Reflexionsbetrieb beleuchtet ist. Der beleuchtete Lichtmodulator 12 generiert ein Modulationsobjekt. Dieses wird über den Strahlteiler 11, die Beleuchtungs-Tubusoptik 7, den Strahlteiler 6 sowie das Objektiv 4 in die Probe 2 projiziert, also abgebildet. Dadurch ist eine Autofokus-Beleuchtung realisiert. Das in der Probe 2 erzeugte Bild des Modulationsobjektes wird im gegenläufigen Weg mittels einer Kamera 16 erfaßt, der ein weiterer Strahlteiler 15 auf der optischen Achse OA2 der Autofokuseinrichtung vorgelagert ist. Die dabei erhaltene optische Achse OA3 ist optional weiter noch über einen Strahlteiler 17 auf eine Kamera 18 geleitet.

Der Strahlteiler 11 ist in der erfindungsgemäßen Bauweise dichroitisch ausgebildet und die Lichtquelle 13 bzw. 14 strahlt bei einer Wellenlänge, die von der Mikroskop - Beleuchtungsquelle 8 nicht wesentlich abgegeben oder für die Probenabbildung nicht benötigt wird. Die Autofokuseinrichtung arbeitet somit in einem Spektralbereich der für die Abbildung der Probe 2 ansonsten nicht verwendet ist.

Von den Kameras sind in den Figuren generell nur die Bildebenen gezeichnet. Die Kameras können generell CCD-Kameras sein.

In der Bauweise der Fig. 1 liegt der Lichtmodulator 12 und damit das Modulationsobjekt senkrecht zur optischen Achse OA2. Die Kamera 16 steht mit ihrer Bildebene dagegen schräg zur optischen Achse OA3. Nimmt der Lichtmodulator 12 beispielsweise eine räumliche Modulation vor, z. B. ein Streifenmuster, findet sich der maximale Kontrast in einer senkrecht zur Zeichenebene liegenden Zeile der Kamera 16. Die Lage der Zeile längs der Kamera 16 ist ein Maß für die Lage der Fokusebene längs der optischen Achse, d. h. in z-Richtung.

Mit Hilfe der Beleuchtungstubusoptik 7 und des Objektivs 4 wird das Modulationsobjekt, das vom Lichtmodulator 12 entweder in Transmissionsbetrieb (Lichtquelle 13) oder im Reflexionsbetrieb (Lichtquelle 14) erzeugt wird, in die Probe abgebildet. Durch die schräggestellte Kamera 16 erfolgt eine Tiefenauflösung. Mittels der Kamera 18 kann zusätzlich eine laterale Verschiebung der strukturiert beleuchteten Probe detektiert werden.

Im Falle eines Fluoreszenzmikroskops werden ein Anregungsfilter 10 sowie ein Emissionsfilter 9 (für die Fluoreszenzstrahlung) verwendet. Das Mikroskop 1 kann ohne weitere Einschränkung hinsichtlich der Autofokuseinrichtung auch als scannendes Mikroskop, insbesondere als Laser-Scanning-Mikroskop ausgebildet sein.

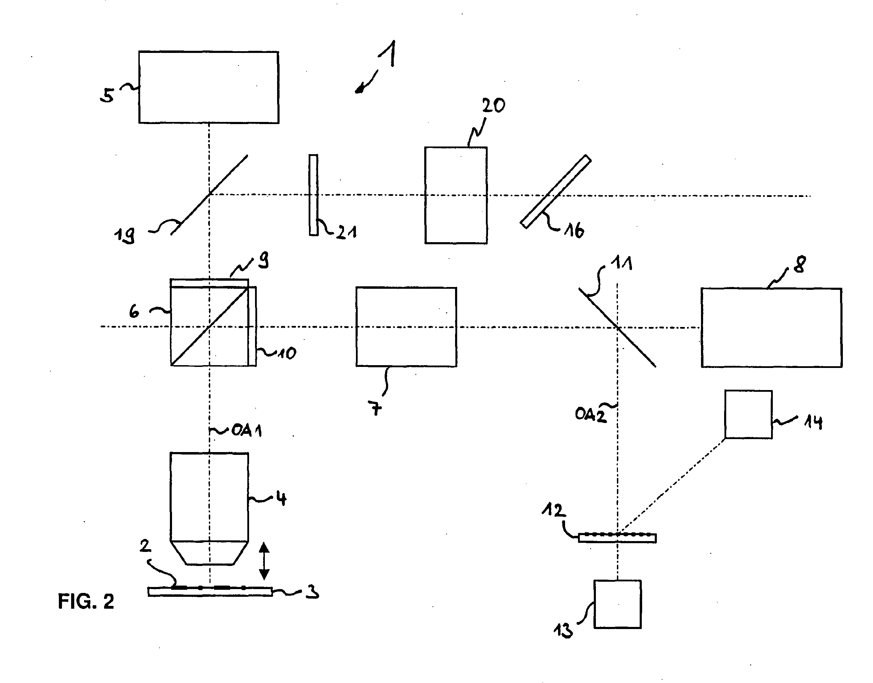

Fig. 2 zeigt eine alternative Gestaltung des Mikroskops der Fig. 1 hinsichtlich der Autofokuseinrichtung. Im Mikroskop der Fig. 2 sind Bauteile, die bereits anhand Fig. 1 erläutert wurden, mit denselben Bezugszeichen versehen; auf ihre wiederholte Beschreibung wird deshalb verzichtet. Die Kamera 16 detektiert hier den Fluoreszenzkontrast der Probe, welcher durch die strukturierte Autofokus-Beleuchtung noch verstärkt werden kann.

Die Abbildung des Modulationsobjektes erfolgt ähnlich wie bei der Bauweise gemäß Fig. 1. Die Erfassung des in die Probe 2 abgebildeten Modulationsbildes geschieht jedoch nicht aus dem Beleuchtungsstrahlengang heraus, sondern über einen eigenständigen Strahlteiles aus dem Mikroskopstrahlengang. Dieser ist an die Wellenlänge der Autofokus-Beleuchtung angepaßt und z. B. im gleichen Maße dichroitisch, wie der Strahlteiler 11. Um das in die Probe abgebildete Modulationsobjekt bzw. dadurch erzeugte Reflexe oder Rückstreuungen mittels der Kamera 16 erfassen zu können, ist dieser Kamera eine entsprechende Relaisoptik 20 vorgeordnet, deren optische Charakteristik dafür sorgt, daß die Bildebene der Kamera 16 eine konjugierte Ebene zum Modulationsobjekt schneidet, idealerweise nahe oder auf der optischen Achse (wie bei Fig. 1 auch).

Die von der Fokuseinrichtung, insbesondere der Kamera 16 gelieferten Signale werden zur Ansteuerung einer Fokusverstellung längs der z-Achse verwertet. Dies ist in Fig. 1 schematisch durch einen Doppelpfeil veranschaulicht. Das dabei eingesetzte Steuergerät ist in den Fig. 1 und 2 nicht gezeigt.

Ist das Mikroskop 1 in Fig. 2 als Laser-Scanning-Mikroskop ausgebildet, wird wiederum die Kombination aus Emissionsfilter 9 und Anregungsfilter 10 vorgesehen, wie auch optional ein weiterer Spektralfilter 21, der dafür sorgt, daß auf die Kamera 16 der Spektralbereich des leuchtenden Modulationsobjektes fällt und nicht weiter interessierende Spektralbereiche ausgeblendet sind insbesondere die Spektralbereiche der Probenabbildung.

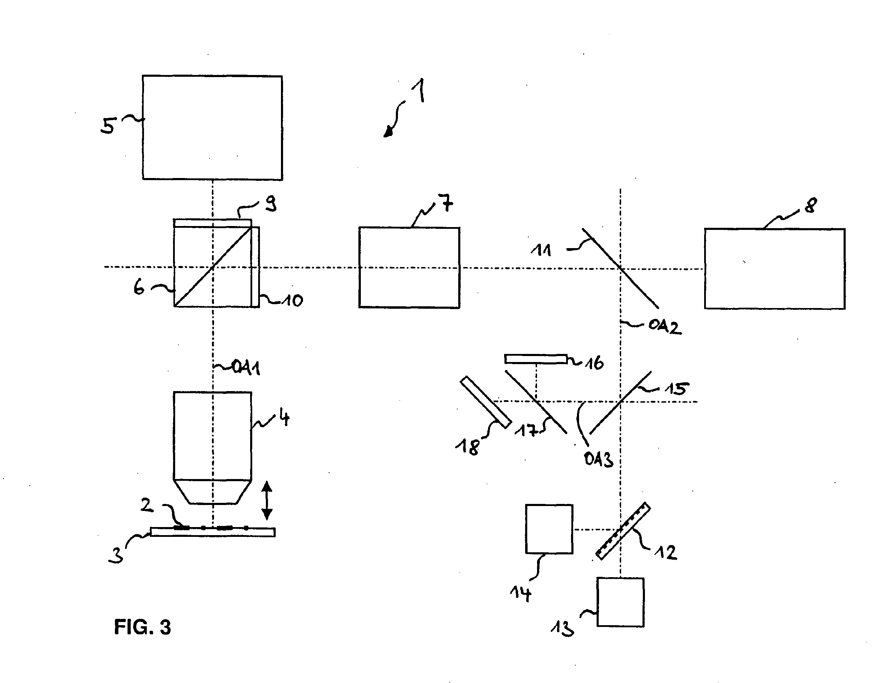

Fig. 3 zeigt als Alternativ beispiel eine Ausbildung des Mikroskops 1 für stark streuende und wenig reflektierende Proben. Elemente, die bereits anhand der Figuren 1 oder 2 erläutert wurden, werden nicht weiter beschrieben. Sie sind in der Figur mit den gleichen Bezugszeichen versehen.

Für stark lichtstreuende Oberflächen, wie z. B. Gewebeschnitte ist die Autofokuseinrichtung gemäß Fig. 3 abgewandelt. Es handelt sich um eine Einrichtung, die vorwiegend das von der Probe gestreute Licht analysiert.

Bei dieser Anordnung schließt der zweidimensionale Lichtmodulator 12 mit der optischen Achse OA2 einen Winkel zwischen 0° und 90°, bevorzugt zwischen 20° und 70° ein. Der Lichtmodulator 12 entspricht wieder der bereits geschilderten Bauweise, d. h. es kann sich um ein Transmissions-LCD, ein Reflexions-LCD, ein DMD oder ein Amplitudengitter mit Verschiebevorrichtung handeln. Die Struktur besteht vorzugsweise wiederum aus Hell-Dunkel-Streifen. Die Beleuchtung des Lichtmodulators 12 erfolgt vorzugsweise durch eine oder mehrere leistungsstarke LED. Auch dies war bei den Fig. 1 und 2 möglich. Bei einem Transmissionsmodulator ist dabei die Lichtquelle 13 vorgesehen, bei einem Reflexionsmodulator die Lichtquelle 14. Übliche optische Vorrichtungen zur Lichthomogenisierungen und Optiken zu Zwischenabbildungen können zur Erzeugung des Modulationsobjektes mit dem Lichtmodulator 12 verwendet werden und sind aus Gründen der Übersicht in der Fig. 3 (wie auch in den Fig. 1 und 2) nicht dargestellt.

Mit Hilfe der Beleuchtungstubusoptik 7 und des Objektivs 4 wird das Modulationsobjekt in die Probe 2 abgebildet. Da der Lichtmodulator 12 und damit das Modulationsobjekt nicht senkrecht zur optischen Achse steht, wird das Modulationsobjekt (z. B. alternierende Hell-Dunkel-Streifen) schräg zur optischen Achse und damit in die Tiefe der Probe abgebildet.

Die Bildebene der Kamera 18 liegt in einer zum Lichtmodulator 12 und damit zum Modulationsobjekt konjugierten Ebene. Sie ist also im gleichen Winkel zur optischen Achse (hier die optische Achse OA3) verkippt, wie der Lichtmodulator 12. Hierdurch wird von der Probe gestreutes Licht moduliert auf die Kamera 18 abgebildet. Der Kontrast des Modulationsobjektes erscheint auf Kamera 18 nur dort, wo er von der Probe gestreut wird. Daher ist die Ausführung in Fig. 2 besonders für dünne oder intransparente, streuende Proben geeignet, beispielsweise in der Materialmikroskopie.

Zusätzlich weist die Autofokuseinrichtung für die Autofokusfunktion noch die Kamera 16 auf, deren Bildebene gegenüber dem Lichtmodulator 12 und damit dem Modulationsobjekt schräg steht, da sie senkrecht zur optischen Achse OA3 liegt. Sie ist über einen 50 %-Splitter 17 innerhalb des Autofokusstrahlenganges eingespiegelt.

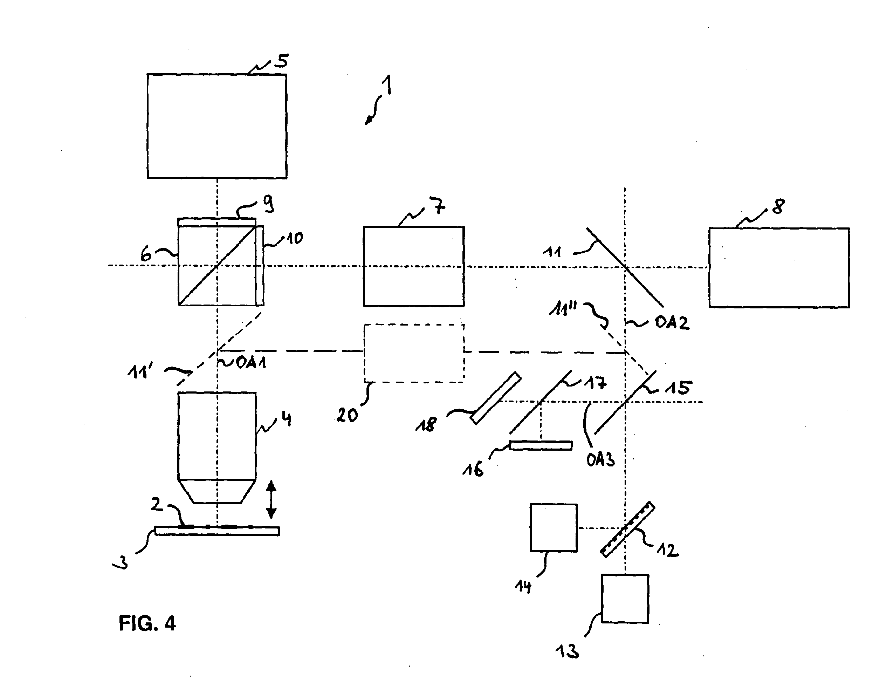

Fig. 4 zeigt als Alternativ beispiel eine weitere Abwandlung des Mikroskops hinsichtlich der Autofokuseinrichtung. Die Anordnung der Fig. 4 unterscheidet sich von der der Fig. 3 dadurch, daß die Kamera 18 nun gegensinnig zum Lichtmodulator verkippt ist. Die Bildebene der Kamera 18 und der Lichtmodulator 12 sind hier derart verkippt, daß sie nicht konjugiert zueinander liegen. Hierdurch kann der Fangbereich vergrößert, typischerweise verdoppelt werden.

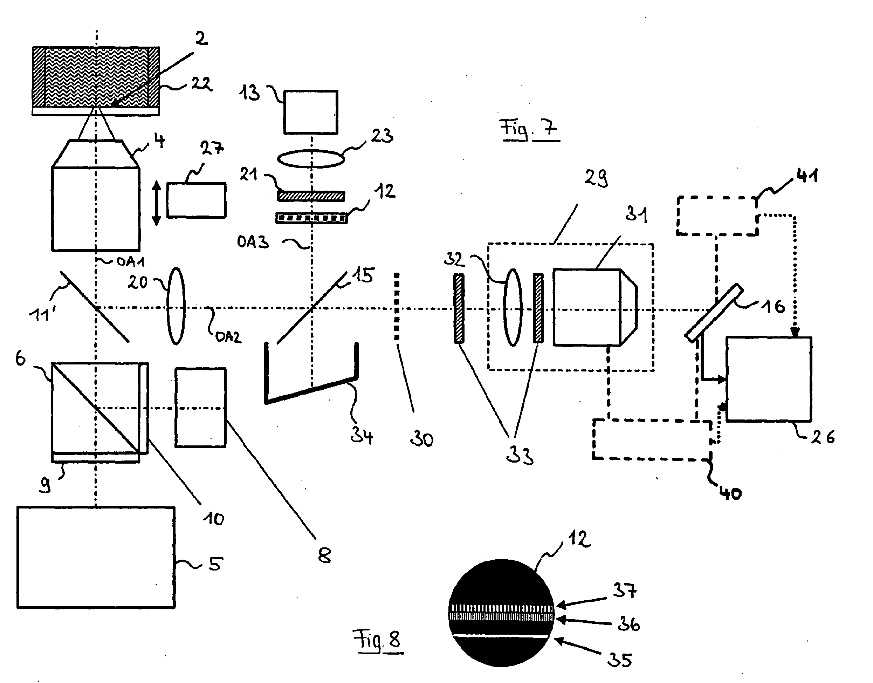

Fig. 4 zeigt gestrichelt noch eine Alternative zur Ankopplung der Autofokuseinrichtung an den Strahlengang des Mikroskops 1. Diese Alternative ist prinzipiell für alle Bauweisen der Autofokuseinrichtung möglich und sieht einen eigenständigen dichroitischen Strahlteiler 11' im Mikroskopstrahlengang vor, der die Strahlung des Lichtmodulators 12 einkoppelt und die Darstellung des in die Probe abgebildeten Modulationsobjektes auf die Kamera 16 bzw. 18 leitet. In der Darstellung der Fig. 4 entfällt bei dieser Bauweise dann der Strahlteiler 11. Statt dessen ist optional ein Umlenkspiegel 11" vorgesehen. Auch erfolgt die Einkopplung über den Strahlteiler 11 mittels einer optionalen Optik 20, die eine gegebenenfalls nötige Zwischenabbildung erzeugt und sicherstellt, daß das Modulationsobjekt, d. h. der beleuchtete Lichtmodulator 12, in einer zur Fokusebene des Objektives 4 konjugierten Ebene liegt, mithin das Modulationsobjekt durch das Objektiv 4 in die Probe 2 abgebildet wird. Dieses Konzept wird später anhand Fig. 7 noch in einer Variante geschildert.

Die in Fig. 4 exemplarisch alternativ eingezeichnete Bauweise hat den Vorteil, daß die Autofokuseinrichtung sehr zuverlässig simultan zu allen gängigen Mikroskopiervorgängen arbeiten kann. Insbesondere ist es möglich, für das Modulationsobjekt, d. h. die Beleuchtung des Lichtmodulators 12, Strahlung zu verwenden, die mit ihrer Wellenlänge oberhalb der für die Mikroskopiervorgänge verwendeten Wellenlängen liegt. Bei Fluoreszenz- oder Durchlichtmessungen kann ein Wellenlängenbereich oberhalb von 700 nm, vorzugsweise oberhalb von 800 nm für die Autofokuseinrichtung verwendet werden. Ein zusätzlicher Spektralfilter vor der Kamera bzw. den Kameras kann potentiell störendes Licht der Mikroskopbeleuchtung effektiv unterdrücken.

Die Bauweisen der Fig. 1 bis 4 zeigen die Anordnung der Autofokuseinrichtung bei einem aufrechten Mikroskop 1 mit einem Objektträger als Probenhalter. Zwischen Objektträger und Objektiv kann sich ein Deckglas wie auch eine Immersionsflüssigkeit (z. B. Öl, Wasser, Glycerin) befinden. Dies ist aber nicht zwingend erforderlich. Es gibt also zwei zu unterscheidende Anwendungsfälle: Ohne Immersionsflüssigkeit erhält man den höchsten Gitterkontrast von der Luft/Glas-Grenzfläche an der Deckglas- oder Objektträgeroberseite. Mit Immersionsflüssigkeit erhält man den höchsten Gitterkontrast von der Grenzfläche zwischen Deckglas-Unterseite und Einbettmedium. Zur Unterdrückung von Streulicht oder unerwünschten Reflexen können Blenden, z.B. halbkreisförmige Blenden, in den Autofokus-Strahlengang eingebracht werden.

Der Strahlteiler 11 oder 11' kann eine planparallele Glasplatte sein, die auf einer Seite entspiegelt ist, ohne störende Sekundärbilder zu vermeiden. Die der Reflexion des Autofokussignals dienende Seite der Glasplatte kann auch eine dichroitische Beschichtung aufweisen, die die Reflektivität für das langweilige Autofokuslicht erhöht (wenn die Variante mit langwelliger Autofokusbeleuchtung verwendet wird) und das kurzweiligere Nutzlicht der Mikroskopie (z. B. Fluoreszenzstrahlung) überwiegend transmittieren. Natürlich sind auch andere spektrale Aufteilungen möglich.

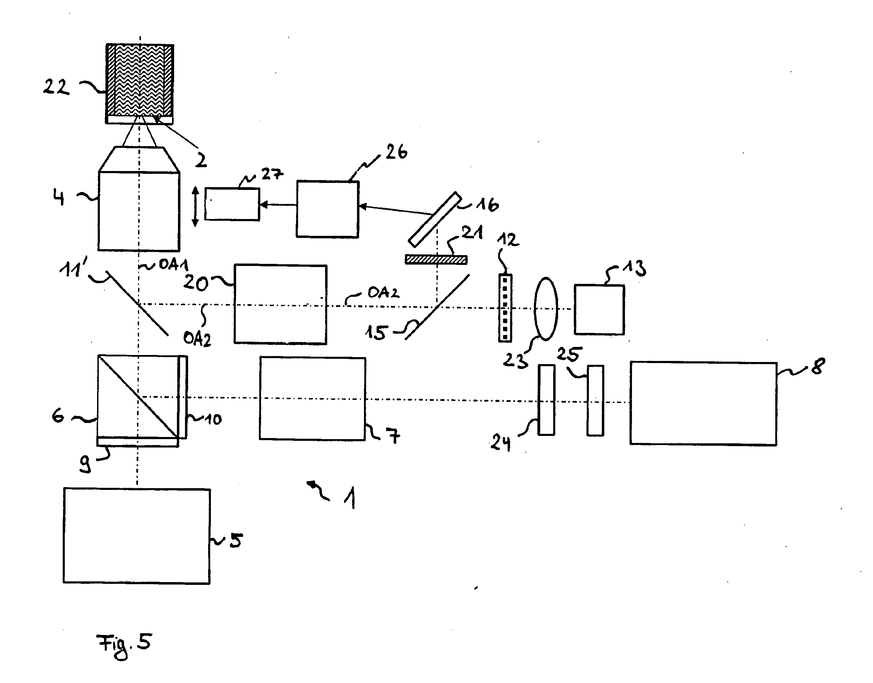

Fig. 5 zeigt ein inverses Mikroskop 1 mit einer erfindungsgemäßen Autofokuseinrichtung. Solche inversen Mikroskope werden vorwiegend zum Auslesen von Titerplatten verwendet, welche nach oben geöffente Küvetten 22 mit Flüssigkeiten besitzen. Zu Fokussieren ist hier meist auf die der Glas/Flüssigkeits-Grenzfläche des Titerplattenbodens (oder in dessen Nähe), wo dem meist Zellen haften. Da diese Zellen den Kontrast des projizierten Gitters, d. h. des Modulationsobjektes, beeinträchtigen, werden bei dieser Bauweise vorzugsweise mindestens 10 Zeilen der flächigen Kamera 16 ausgewertet. Dadurch kann das Kontrastsignal über eine größere Anzahl von Zeilen gemittelt werden, was die Meßgenauigkeit wesentlich verbessert. Zwischen Objektiv 4 und Titerplattenboden kann sich wiederum Luft oder eine Immersionsflüssigkeit befinden, das oben bereits Gesagte gilt analog. Der einzige Unterschied besteht darin, daß anstelle des Einbettmediums eine ausgedehnte Flüssigkeitssäule vorliegt, die über der Probe in der Küvette 22 steht.

Die Autofokuseinrichtung ist in der Bauweise der Fig. 5 wiederum über einen eigenen dichroitischen Strahlteiler 11' in den Mikroskopstrahlengang und nicht in den Beleuchtungsstrahlengang eingekoppelt. Ansonsten gilt das bereits Gesagte analog. Zusätzlich ist in Fig. 5 noch das optionale Spektralfilter 21 eingezeichnet. Auch ist die Ausleuchtungsoptik 23 zur Erzeugung des Modulationsobjektes aus dem Lichtmodulator 12 exemplarisch dargestellt. Zur homogenen Ausleuchtung des Lichtmodulators 12 enthält vorzugsweise die Ausleuchtungsoptik 23 auch eine Streuscheibe. Eine Ausleuchtungsoptik 23 kann in allen beschriebenen Varianten verwendet werden.

Weiter zeigt Fig. 5, daß die Signale der Kamera 16 an ein Steuergerät 26 geleitet werden, das entsprechende Berechnungen vornimmt und unter anderem den bereits erwähnten z-Antrieb 27 zur Verstellung der Fokuslage ansteuert. Natürlich ist das Steuergerät 26 in der Regel auch mit dem Lichtmodulator 12 verbunden, sofern dieser ansteuerbar ist. Gleiches gilt für die Lichtquelle 13. oder 14. Das Steuergerät 26 und die damit verbundenen Elemente sind auch bei den Bauweisen gemäß Fig. 1 bis 4 möglich.

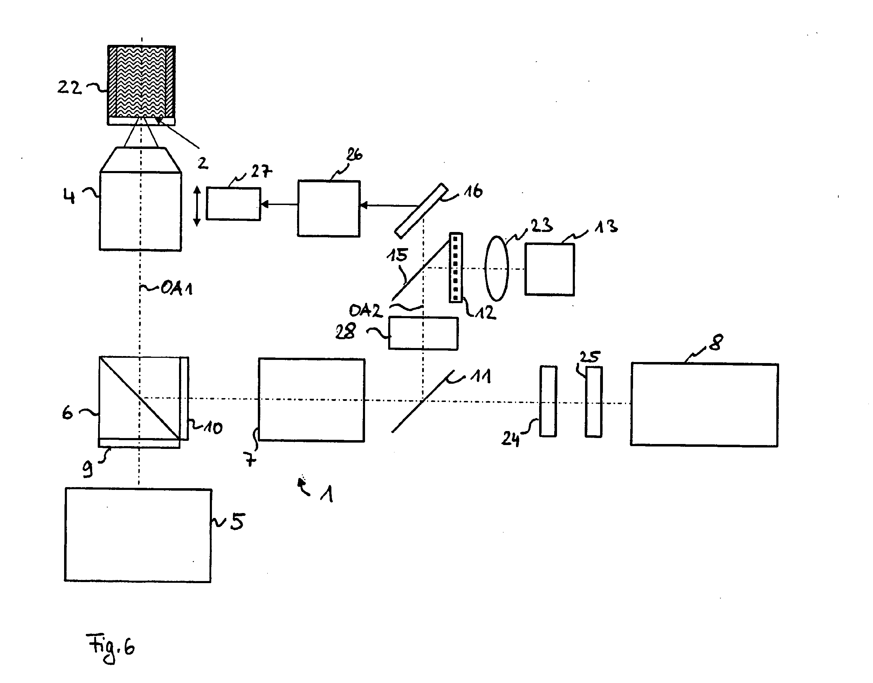

Fig. 6 zeigt eine Abwandlung der Bauweise der Fig. 5. Hier ist nun analog zur Bauweise der Fig. 1 die Autofokuseinrichtung über den Strahlteiler 11 in den Beleuchtungsstrahlengang eingespiegelt. Die separate Optik 20 kann entfallen, da dann keine Autofokusbeleuchtungstubusoptik nötig ist; deren Funktion wird von der Beleuchtungstubusoptik 7 erfüllt. Zusätzlich sind in Fig. 6 noch optionale Filter 24 und 25 im Beleuchtungsstrahlengang eingezeichnet. Auch ist der Einkopplung über den Strahlteiler 11 in Abbildungsrichtung des Modulationsobjektes eine Verkleinerungsoptik 28 vorgeordnet, die den Fangbereich der Autofokuseinrichtung beeinflußt und so dessen ideale Auslegung ermöglicht. Die Optiken 7, 20 und 28 können auch als (motorisierte) Variooptiken ausgelegt sein, um unterschiedliche Objektiwergrößerungen auszugleichen.

Fig. 7 zeigt eine weitere Bauweise eines Mikroskops mit einer Autofokuseinrichtung. Bauelemente, die in ihrer Funktion und/oder Struktur Elementen aus bereits beschriebenen Mikroskopen entsprechen, werden auch hier nicht noch einmal erläutert, um unnötige Wiederholungen zu vermeiden. In der Autofokuseinrichtung der Fig. 7 ist der Kamera 16 nun eine Abbildungsoptik 29 vorgeordnet, so daß nicht das Bild des Modulationsobjektes in der Probe direkt, sondern ein Zwischenbild 30 auf die Kamera 16 abgebildet wird. Natürlich kann dieses Prinzip, das in Fig. 7 am Beispiel eines inversen Mikroskops gezeigt wird, ganz grundsätzlich Anwendung finden. Der hier als Transmissionsgitter ausgebildete Lichtmodulator und das Zwischenbild 30 liegen in Ebenen, die zur Probenfokusebene sowie zu der Ebene, welche die Kamera 16 schneidet, konjugiert sind.

Die Abbildung des in der Probe liegenden Bildes des Modulationsobjektes unter Verwendung des Zwischenbildes 30 hat den erheblichen Vorteil, das der weitere Strahlteiler 15, der z. B. als 50:50-Strahlteiler abgebildet sein kann, in großer Entfernung zur Kamera 16 liegt. Unvermeidbares Streulicht vom weiteren Strahlteiler 15 gelangt so nur noch über Mehrfachreflexionen, d. h. stark abgeschwächt zur Kamera 16. Zusätzlich werden durch die Zwischenbildeinkopplung auch alle von Optiken rechts des weiteren Strahlteilers 15 Reflexe zur Kamera 16 hin vermieden.

In einer exemplarischen Bauweise der Autofokuseinrichtung für das Mikroskop der Fig. 7 wird als Lichtquelle 13 eine IR-LED verwendet, deren Schwerpunktwellenlänge oberhalb 800 nm liegt, vorzugsweise bei 830 nm. Die Lichtquelle 13 ist mit dem Steuergerät 26 verbunden, so daß sie Bedarf ein- oder ausgeschaltet, zeitlich moduliert oder in ihrer Helligkeit regulierbar wird.

Der Lichtmodulator 12 ist als spaltenförmiges Transmissionsgitter ausgebildet. Um die Spalten möglichst homogen auszuleuchten und die Strahlung der Beleuchtungsquelle 13 somit möglichst effizient zu nutzen, ist eine Kollimatoroptik mit einer anamorphotischen Optik 23 vorgesehen, die eine linienförmige Beleuchtung bewirkt. Dem Lichtmodulator 12 vorgeordnet (alternativ auch nachgeordnet) ist das Filter 21, das als IR-Bandpaßfilter ausgebildet ist und an die Schwerpunktwellenlänge der IR-LED angepaßt ist. Die Bandpaßbreite liegt zwischen 10 und 50 nm, wodurch unerwünschte spektrale Anteile der Lichtquelle 13 unterdrückt werden.

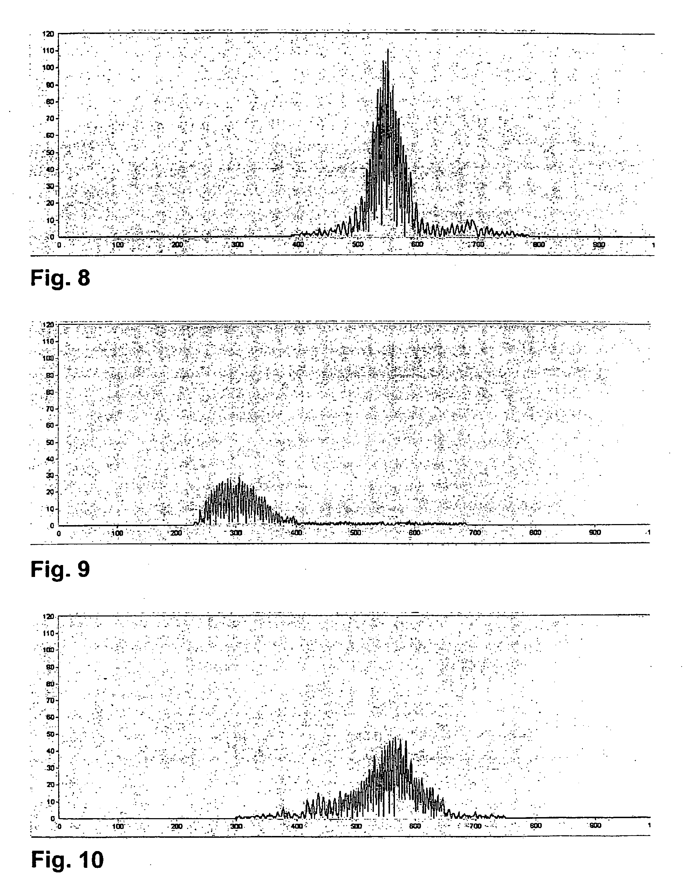

Das Transmissionsgitter ist exemplarisch in Fig. 8 in Draufsicht gezeigt. Es besteht aus einer spaltförmige Blende, die eine periodische Gitterstruktur enthält. Dieser Gitterspalt befindet sich in der Bildmitte oder in der Nähe der Bildmitte, um eine möglichst großen Fangbereich der Autofokuseinrichtung zu gewährleisten. Optional können, wie in Fig. 8 zu sehen ist, weitere Gitterspalte mit anderen Gitterperioden vorgesehen sein, um durch Auswahl der Gitterperiode den Abbildungskontrast auf der Kamera zu optimieren. Die Auswahl geschieht vorzugsweise durch entsprechendes Auslesen der 2D-Kamera 16. Auch kann ein schmaler Spalt 35 ohne Gitterstruktur vorgesehen sein. Das von der Glas/Flüssigkeits-Grenzfläche reflektierte Licht des Spaltbildes wird auf einen separaten Anteil der Kamera 16 abgebildet. Damit kann außerhalb des eigentlichen Fangbereichs anhand der abgebildeten Helligkeitsverteilung über den Spalt die Defokusierung grob ermittelt werden. Somit ist eine Vorfokussierung möglich, auch wenn noch kein Kontrastsignal vom Gitter an der Kamera 16 vorliegt. Damit kann das Steuergerät 26 ermitteln, in welche Richtung die z-Verstellung erfolgen muß, d. h. wie der Antrieb 27 anzusteuern ist, um wieder in den primären Fangbereich zu gelangen. Ist der Spalt hinreichend schmal, so ist die Helligkeit aufgrund konfokaler Unterdrückung an der Kamera 16 höher. Aus der Steigung der Helligkeitsverteilung kann der notwendige Verfahrweg in den primären Fangbereich abgeleitet werden. Dies führt das Steuergerät 26 durch.

Am weiteren Strahlteiler 15 ist eine Lichtfalle 34 vorgesehen, die Strahlung vom Lichtmodulator 12, welche transmittiert würde, absorbiert. Die Lichtfalle 34 ist vorzugsweise als schräg zur optischen Achse gestellte Platte eines stark absorbierenden Materials ausgebildet, z. B. als polierte NG1-Platte. NG1 ist ein stark absorbierendes, schwarzes Glas.

Der dichroitisch Strahlteiler 11' reflektiert nur Strahlung der Wellenlänge, wie sie nach dem Bandpaßfilter 21 im Autofokusstrahlengang geführt ist. Andere Spektralanteile werden transmittiert. Dazu weist der Strahlteiler 11' eine Interferenzschicht auf, die Strahlung unterhalb 800 nm bei einem Einfallswinkel von 45° weitgehend transmittiert und Strahlung mit der Schwerpunktwellenlänge der IR-LED weitgehend reflektiert. Auch kann der Strahlteiler 11' einen Keilwinkel aufweisen, um Interferenzen, die bei einem Laser-Scanningmikroskop, als das das Mikroskop der Fig. 7 ausgebildet sein kann, stören würden. Um auch mit lichtlinearer Fluoreszenzanregung arbeiten zu können, welche ebenfalls mit IR-Strahlung im Mikroskop zur Probenabbildung arbeitet, kann der Strahlteiler 11' auch ein bandpaßartiges Spektralverhalten aufweisen, so daß Wellenlängen oberhalb des Autofokus-Spektralbereiches (z. B. oberhalb 840 nm) ebenfalls bei 45° Einfallswinkel weitgehend transmittiert werden. Natürlich können diese Strahlteilermerkmale auch in anderen Ausführungsformen verwendet werden.

Weiter ist es vorzugsweise möglich, den Strahlteiler wechselbar zu gestalten, z. B. mittels eines Wechselrades oder eines anderen Wechselmechanismusses.

Der Abbildung des in der Probe liegenden Bildes des Modulationsobjektes bzw. dessen Zwischenbild 30 sind Sperrfilter 33 vorgelagert, die dafür sorgen, daß nur Strahlung des entsprechenden Autofokus-Spektralbereiches zur Kamera 16 gelangt. Andere Strahlung die aus der Abbildung der Probe stammen kann, z. B. Anregungs- oder Fluoreszenzstrahlung in Falle eines Laser-Scanning-Mikroskops, wird dadurch nochmals unterdrückt.

Die Abbildungsoptik 29 bildet das in der Probe liegende Bild des Modulationsobjektes bzw. das an einer Grenzfläche, z. B. der Glas/Flüssigkeits-Grenzfläche reflektierte Zwischenbild 30 auf die Kamera 16 ab. Die Abbildungsoptik 29 kann z. B. aus einer Tubuslinse 32 und einem Standardobjektiv 31 mit kleiner numerischer Apertur (z. B. NA=0,2) aufgebaut sein.

Die Fig. 9 und 10 zeigen das Kontrastsignal der Kamera 16 beim Autofokussystem, z. B. der Bauweise gemäß Fig. 7. Fig. 9 zeigt das Kontrastsignal in der Bildfeldmitte und Fig. 10 das am Bildfeldrand. Dabei ist in beiden Figuren das Kontrastsignal in willkürlichen Einheiten über der Pixelnummer der hier exemplarisch zeilenförmigen Kamera (16) aufgetragen.

Der Fangbereich des Autofokussystems ist vorgegeben durch den Bereich der z-Verschiebung des Objektivs 4 (oder der Grenzfläche), in dem noch ein auswertbares Kontrastsignal auf der Autofokuskamera vorliegt. Zwei Bedingungen müssen hierzu erfüllt sein:
1. Das Kontrastsignal muß sich noch innerhalb des Bildfeldes befinden.
2. Das Kontrastsignal muß einen hinreichenden Signalpegel aufweisen, der signifikant über dem Rauschpegel liegt.

Der Haltebereich, in dem durch Nachregeln der Fokus gehalten werden kann, ist begrenzt durch den maximal zulässigen Bereich der z-Verschiebung der Fokusebene in die Probe hinein. Für den Fall, daß sich der Kontrastschwerpunkt in der Bildfeldmitte befindet, wenn die Fokusebene des Mikroskop-Objektivs 4 genau auf der Grenzfläche liegt, ist der Haltebereich genau halb so groß wie der Fangbereich. Dies ist in der Darstellung der Fig. 9 der Fall.

Aus den Fig. 9 und 10 ist nun zu entnehmen, daß der Kontrast bei Verschiebung des Kontrastschwerpunkts von der Bildfeldmitte zum am Bildfeldrand von etwa 110 auf etwa 30 abnimmt. Diese Verschlechterung des Signal/Rausch-Verhältnisses resultiert hauptsächlich aus sphärischer Aberration und aus Koma, zwei Bildfehlern, die zum Bildfeldrand stets zunehmen. Ein Kontrastpegel von 30 kann gerade noch sinnvoll ausgewertet werden. Aus diesem Grund muß die Bildfeldgröße auf der schräg gestellten Autofokuskamera so gewählt werden, daß am Rand des Fangbereichs die Kontrasthöhe gerade noch ausreicht. Die Größe der Kamera ist entsprechend angepaßt.

Es ist deshalb optional eine Weiterbildung vorgesehen, die exemplarisch in Fig. 7 gestrichelt eingezeichnet ist. Dort ist ein Längs-Verstellmechanismus 40 vorgesehen, der den Abstand zwischen Autofokus-Objektiv 31 und Autofokus-Kamera 16 variiert. Dazu kann wahlweise das Objektiv 31 gegenüber der feststehenden Kamera 16 oder die Kamera 16 gegenüber dem feststehenden Objektiv 31 längs der optischen Achse bewegt werden. Für den vorzugsweise elektronisch angesteuerte Längs-Verstellmechanismus sind alle bekannten Antriebstechniken, wie Spindelantriebe, Schrittmotoren, Gleichstrommotoren, Piezosteller usw. geeignet.

Die Variation des Abstandes zwischen Autofokus-Objektiv 31 und Kamera 16 ist nur ein Beispiel für das allgemein zugrundeliegende Prinzip, der Längsverstellung von Kamera 16 zur Bildebene der Autofokus-Abbildung. Im einfachsten Fall kann der Längs-Verstellmechanismus eine Verschiebung der Kamera 16, der Abbildungsoptik 29 oder des Lichtmodulators 12 bewirken.

Die Weiterbildung behebt die beschriebene Limitierung des Fang- bzw. Haltebereichs.

Nun wird der Abstand zwischen Autofokus-Objektiv und Autofokuskamera an den gewünschten Haltebereich so angepaßt, daß der Schwerpunkt des Kontrastsignals immer in der Bildfeldmitte liegt. Hierzu werden folgende Schritte durchgeführt:
1. Mit Hilfe des z-Antriebs 27 des Mikroskops wird die Grenzfläche in die Fokusebene des Mikroskop-Objektivs 4 gebracht. Dies ist die Ausgangsposition für den erweiterten Haltefokusmodus. Der Schwerpunkt des Kontrastsignals befindet sich jetzt in der Bildfeldmitte des Autofokus-Objektivs 31, wo die Bildfehler am geringsten sind.
2. Die Fokusebene des Mikroskop-Objektivs 4 wird mit Hilfe des z-Antriebs 27 in die Probe hinein gefahren. Simultan hierzu wird der Abstand zwischen Autofokus-Objektiv 31 und Kamera 16 so variiert, daß der Kontrastschwerpunkt in der Bildfeldmitte des Autofokus-Objektivs 31 verbleibt.
3. Ist die gewünschte Fokusebene eingestellt, wird die bereits geschilderte Haltefokus-Funktion aktiviert. Dadurch werden alle Defokussierungen durch den z-Antrieb ausgeglichen, während der Abstand zwischen Autofokus-Objektiv 31 und Kamera 16 konstant bleibt. Durch die Haltefokus-Funktion verbleibt der Kontrastschwerpunkt auch weiterhin in der Bildfeldmitte des Autofokus-Objektivs 31 und damit in der Mitte der Kamera 16.

Die Wirkung der Längs-Verstellung zeigt Fig. 11, die das Kontrastsignal wieder in der Bildfeldmitte aufweist. Die Signalhöhe ist verglichen, mit Fig. 10 um 67% auf einen Pegel von etwa 50 verbessert. Durch diese Verstellmöglichkeit bzw. Vorgehensweise ist der Fang- bzw. Haltebereich nicht mehr durch die Bildfeldgröße des Autofokus-Objektivs 31 limitiert. Der Fangbereich kann erheblich erweitert, typischerweise verdoppelt, werden.

Begrenzt ist der Fang- bzw. Haltebereich lediglich durch die Bildfehler in der Bildfeldmitte des Autofokus-Objektivs 31. Dabei handelt es sich vorwiegend um sphärische Aberration. Die zum Bildfeldrand hin deutlich zunehmenden Aberrationen, vor allem Koma und Wölbung, wirken sich nun nicht mehr störend aus. Zusätzlich werden noch andere Probleme, die am Bildfeldrand auftreten, wie Randabfall der Beleuchtung, Vignettierung und Reflexe etc. umgangen.

Weil das Kontrastsignal in der Bildfeldmitte verbleibt, kann auch der Lichtmodulator 12 kleiner ausgelegt werden. Es muß nun nicht mehr über das gesamte Bildfeld des Objektivs 4 verlaufen, um den Fangbereich zu maximieren. Dadurch wird weniger Autofokuslicht in den Mikroskopstrahlengang eingekoppelt, was den Streulichtuntergrund auf der Autofokus-Kamera 16 verringert. Wenn ein kleinerer (d.h. kürzerer) Lichtmodulator 12 verwendet wird, kann auch ein kleinerer und damit kostengünstigerer Kamerachip für die Autofokus-Kamera 16 verwendet werden.

Die auf die Kamera 16 abgebildete Struktur des Lichtmodulators 12, dem Winkel zwischen der Kamera 16, die Auflösung der Kamera u. statistische Intensitätsschwankungen während der Messung beeinflussen die Regelgenauigkeit der z-Position. Um die Regelgenauigkeit z. B. während des Haltefokus verändern zu können, durchaus auch abhängig vom Mikroskopobjektiv, können optional mehrere als Lichtmodulator 12 nebeneinanderliegeride Gitterstrukturen mit unterschiedlichen Perioden ausgewertet werden und/oder der Schrägstellungswinkel des Lichtmodulators 12 oder der Kamera 16 wird die Messung entsprechend einer geforderten Regelgenauigkeit angepaßt. Die letztere Variante ist in Fig. 7 gestrichelt eingezeichnet. Dort ist ein Winkel-Verstellmechanismus 41 vorgesehen.

Ist der Haltefokuseinstellvorgang abgeschlossen, kann so nach vorher definierten Genauigkeitsanforderungen z.B. der Winkel der Kamera 16 vorzugsweise elektronisch verstellt werden. Die Verstellung des Winkels zwischen Kamera 16 und Bild des Modulationsobjektes erfolgt in einfachsten Fall durch Rotation des Kamera 16 oder des Lichtmodulators 12 mittels eines geeigneten Winkel-Verstellmechanismus.

Hierzu eignen sich alle bekannten Techniken, wie Spindelantriebe, Schrittmotoren, Gleichstrommotoren, Linearmotore, Piezosteller usw. Bei geeignetem Winkel, und entsprechend ausgewählten Gitter mit geeignetem Gitterabstand, kann die Genauigkeitsauflösung angepaßt werden.

Die geschilderten Verstellmechanismen 40, 41 geben ein Verstellsignal ab, das dem Steuergerät 26 der Autofokuseinrichtung zugeführt ist.

Für alle Ausführungsformen des Mikroskops 1 mit Autofokuseinrichtung gilt folgendes:

Die geschilderten Erweiterungen hinsichtlich Fangbereich bzw. Verstellung der Positioniergenauigkeit lassen sich natürlich nicht nur bei der Bauweise der Fig. 7, sondern bei allen Ausführungsformen einsetzen.

Um bei einem Online-Tracking möglichst geringe Einflüsse durch die strukturierte Beleuchtung, d. h. das Bild des Modulationsobjektes, zu produzieren, kann als Modulationsobjekt ein Streifenmuster auf die Probe projiziert werden, das in schneller Folge (>30 Hz) alternierend lateral verschoben wird. Bei zwei Positionen wäre es eine Phasenverschiebung um 180°, bei drei Positionen eine Phasenverschiebung um 120°. Die Gitterstruktur (Gitterkonstante, Hell/Dunkel-Verhältnis) kann dabei über den elektronischen Lichtmodulator 12 in der Ansteuerung leicht derart angepaßt werden, daß im zeitlichen Mittel eine homogene Beleuchtung entsteht. Die Anpassung der optimalen Gitterstruktur an das jeweils verwendete Objektiv 4 bzw. dessen NA oder Vergrößerung ist auch möglich.

Ein weiterer Vorteil eines verstellbaren, insbesondere ansteuerbaren Lichtmodulators 12 und damit einer variablen Autofokus-Beleuchtungsstruktur besteht darin, nach dem Auffinden eines Objektes nur noch die interessanten Bereiche des Objektfeldes auszuleuchten. Hierdurch kann der Bildkontrast für die Tracking-Vorrichtung, gegebenenfalls aber auch für den normalen Detektionskanal erhöht werden.

Prinzipiell ist die strukturierte Autofokus-Beleuchtung, z.B. mittels LCD oder DMD, auch bei einem Durchlichtmikroskop und/oder als Dunkelfeldbeleuchtung realisierbar. Im Durchlicht ist die Anwendung dann aber auf transparente Probenträger sowie auf streuende oder fluoreszierende Proben eingeschränkt.

Bei allen Varianten des Autofokus- und Tracking-Systems wird eine rechnerische Steuer- und Auswerteeinrichtung (z.B. ein Computer) verwendet, die die Signalanalyse und die Steuerung des Aktuatoren (z-Trieb, x-y-Tisch, Filter etc.) vornimmt. Auswertung und Steuerung können Firmware- und/oder Software-technisch implementiert werden. Diese Steuer- und Auswerteeinrichtung übernimmt sämtliche hier geschilderte Ablaufsteuerung.

Statt verstellbarer, z. B. elektrisch schaltbarer Lichtmodulatoren (z. B. LCD, DMD) können auch statische Lichtmodulatoren (Transmissions- oder Phasengitter) verwendet werden. Das projizierte Modulationsobjekt kann mit verkippbaren Planplatten oder anderen Vorrichtungen probenseitig verschiebbar sein. Ein Austausch der Gitter kann zur Variation der Gitterkonstante oder -struktur ebenfalls möglich sein. Wie erläutert kann auch eine flächige Gitterstruktur verwendet werden, die mehrere unterschiedliche Gitterperioden aufweist, beispielsweise 2 bis 10 nebeneinander angeordnete Streifengitter mit unterschiedlichen Gitterfrequenzen. Dies zeigt exemplarisch, daß der Lichtmodulator auch linien- bzw. zeilenförmig sein kann und nicht zwingend zweidimensional sein muß.

Da das erfindungsgemäße Autofokusverfahren aber mit flächigen (zweidimensionalen) Kameras arbeitet, kann bei mehreren Gitterzeilen für jeden Anwendungsfall das am besten geeignete Gitter durch Auslesen der entsprechenden Kamerazeilen gewählt werden, ohne mechanische Änderungen (Austausch des Gitters) vornehmen zu müssen. Grundsätzlich sind senkrecht zur optischen Achse stehende Lichtmodulatoren 12 als Transmissionsmodulatoren leichter implementierbar, während geneigte Lichtmodulatoren 12 leichter als Reflexionsmodulatoren realisierbar sind. Sollen sehr kleine Objekte durch das Tracking-System erfaßt werden, so kann es vorkommen, daß eine hinreichend hochfrequente Beleuchtungsmodulation nicht mehr möglich ist. In diesem Fall kann auch räumlich unmoduliert beleuchtet und nur die Intensität der gestreuten oder reflektierten Signale ausgewertet werden. Als ortsauflösende Detektoren kommen neben CCD-Kameras auch CMOS- sowie alle anderen Arten von Digitalkameras in Frage.

Die Autofokuseinrichtung soll einen bestimmten Bereich der Probe automatisch fokussieren oder in der Fokusebene des Objektivs halten. Hierzu kann ein Offset (typisch 0 ... 1000 µm) zwischen Grenzfläche und relevanter Probenebene vorgegeben werden. Wird dieser Offset in Stufen variiert, so ist es auch möglich sogenannte z-Stapel von Bildern aufzunehmen, wobei jedes Bild einen definierten und kontrollierten Abstand zur Grenzfläche hat. Die Anordnung kann in Verbindung mit allen gängigen Kontrastverfahren der Mikroskopie verwendet werden: u.a. Fluoreszenz, Durchlicht, Phasen kontrast, Interferenzkontrast, Polarisationskontrast, Auflicht, Luminiszenz, CARS (= Coherent Anti-Stokes Raman Scattering), OCT (= Optical Coherence Tomography), SPIM (= Selective Plane Illumination) etc.

Soweit in dieser Beschreibung Verfahrensschritte bzw. besondere Betriebsweisen oder -Modi geschildert sind, werden diese durch ein zur Autofokuseinrichtug gehörenden Steuereinrichtung z. B. wie im Steuergerät 26, realisiert. Natürlich kann auch eine im Mikroskop 1 ohnehin vorhandene Steuereinrichtung die entsprechenden Steueraufgaben mit übernehmen.

Der Betrieb des Mikroskopes mit der erfindungsgemäßen Autofokuseinrichtung kann derart ablaufen, das die Abbildung der Probe zuerst visuell oder mittels eines bekannten Software-Autofokussystems scharf gestellt wird. Anschließend wird die Autofokuseinrichtung der beschriebenen Art aktiviert und sorgt dafür, das der Abstand zwischen der interessierenden Probenebene z. B. einer Glas/Flüssigkeits-Grenzfläche und der eingestellten Fokusebene des Mikroskop-Objektivs 4 konstant bleibt. Hierzu wird der Antrieb 27 so angesteuert, daß das Kontrastmaximum stets auf der gleichen Stelle der Kamera 16 verweilt. Diese Funktionalität realisiert einen sogenannten Haltefokus, der auch bei unvermeidlichem Driften eine konstante Fokuslage sicherstellt.

Um mit der Autofokuseinrichtung möglichst weit in die Probe hinein messen zu können, kann die Kamera 16 asymmetrisch zur jeweiligen optischen Achse, (z. B. optischen Achse oa2 in Fig. 7) angeordnet sein, so daß sich ein asymmetrischer Fangbereich ergibt. Beispielsweise kann das Kontrastmaximum von Anfang an nahe einem Rand des Fangbereiches liegen, wenn eine Glas/Flüssigkeits-Grenzfläche mit der eingestellten Fokusebene des Mikroskopobjektivs 4 zusammenfällt. Der andere Rand des Fangbereichs entspricht dann dem maximalen Abstand von der Glas/Flüssigkeits-Grenzfläche zur eingestellten Fokusebene, in dem noch der Fokus fixiert werden kann, also dem maximalen Haltebereich.

Je nach Objektivvergrößerungen sind Fang- bzw. Haltebereiche von 10 µm bis 10mm erreichbar. Die Auflösung in z-Ebene beträgt je nach Objektivvergrößerung numerischer Apertur 5 nm bis 5 µm. Die z-Auflösung ist also stets mindestens 5-mal besser als die Schärfentiefe des verwendeten Mikroskopobjektivs 4.

## Patentansprüche

1. Mikroskop mit einem Objektiv (4), das eine in einem Probenvolumen (2) liegende Fokusebene aufweist, und einer Autofokuseinrichtung, die aufweist
- einen Lichtmodulator (12) zur Erzeugung eines Modulationsobjektes,
- eine Autofokus-Beleuchtungsoptik (7; 20; 7, 28), die das Modulationsobjekt abbildet, so daß im Probevolumen (2) ein Bild des Modulationsobjektes entsteht, wobei die Abbildung des Modulationsobjektes über einen Strahlteiler (6, 11, 11') erfolgt, der den Strahlengang der Autofokus-Beleuchtungsoptik in den Mikroskopstrahlengang einspiegelt,
- eine Autofokus-Kamera (16,18) zur Aufnahme eines zweidimensionalen Bildes, die eine Kamera-Bildebene aufweist,
- eine Autofokus-Abbildungsoptik (7; 20; 7, 28; 20, 29 ), die das im Probevolumen (2) liegende Bild des Modulationsobjektes in eine Autofokus-Bildebene abbildet, **dadurch gekennzeichnet, daß**
- der Lichtmodulator (12) zur Erzeugung eines leuchtenden, zweidimensionalen, periodisch intensitätsmodulierten Modulationsobjektes ausgebildet ist,
- die Autofokus-Beleuchtungsoptik (7; 20; 7, 28) das leuchtende Modulationsobjekt in die Fokusebene des Objektives (4) abbildet,
- die Kamera-Bildebene die Autofokus-Bildebene schneidet und
- der Lichtmodulator (12) in einem Autofokus-Spektralbereich leuchtet oder beleuchtet ist, der von einem für die Probenabbildung im Mikroskop (1) verwendeten Spektralbereich verschieden ist, und die Autofokus-Abbildungsoptik mindestens einen Filter (21, 33) aufweist, der außerhalb des Autofokus-Spektralbereiches liegende Spektralanteile unterdrückt oder ausfiltert.

2. Mikroskop nach Anspruch 1, **dadurch gekennzeichnet, daß** der Lichtmodulator (12) ansteuerbar und zur Erzeugung eines räumlich oder zeitlich intensitätsmodulierten Modulationsobjektes angesteuert ist und die Autofokus-Kamera den Kontrast zu dieser räumlichen oder zeitlichen Modulation erfaßt.

3. Mikroskop nach einem der obigen Ansprüche, **dadurch gekennzeichnet, daß** die Autofokus-Beleuchtungsoptik einen zwischen Lichtmodulator (12) und Strahlteiler (6) liegenden weiteren Strahlteiler (15) aufweist.

4. Mikroskop nach einem der obigen Ansprüche, **dadurch gekennzeichnet, daß** die Kamera-Bildebene in einem Winkel von 10° bis 80° zur optischen Achse (OA2, OA3) liegt.

5. Mikroskop nach einem der obigen Ansprüche, **dadurch gekennzeichnet, daß** die Autofokus-Beleuchtungsoptik (7; 20) das Modulationsobjekt in einen Auflichtbeleuchtungsstrahlengang des Mikroskops einspiegelt.

6. Mikroskop nach Anspruch 7, **dadurch gekennzeichnet, daß** die Autofokus-Abbildungsoptik (20) die Kamera (16, 18) parallel zum Auflichtbeleuchtungsstrahlengang (7) des Mikroskops (1) in den Mikroskopstrahlengang einspiegelt.

7. Mikroskop nach einem der Ansprüche 1 bis 5, **dadurch gekennzeichnet, daß** der Strahlteiler die Autofokus-Beleuchtung bzw. Autofokus-Abbildung parallel zu einem Auflichtbeleuchtungsstrahlengang (7, 8) des Mikroskops (1) einspiegelt.

8. Mikroskop nach einem der obigen Ansprüche, **dadurch gekennzeichnet, daß** eine zweite Autofokus-Kamera (18) vorgesehen ist, deren Bildebene zu der der ersten Autofokus-Kamera (16) geneigt ist und auf welche die Autofokus-Abbildungsoptik ebenfalls das Bild des Modulationsobjektes abbildet.

9. Mikroskop nach einem der obigen Ansprüche, **dadurch gekennzeichnet, daß** der Strahlteiler (6, 11, 11') ein Dichroit ist.

10. Mikroskop nach einem der obigen Ansprüche, **dadurch gekennzeichnet, daß** die Autofokus-Abbildungsoptik eine der Autofokus-Kamera (16, 18) vorgeordnete Optik (29) aufweist und so das Bild des Modulationsobjekt mit einer Zwischenabbildung auf die Autofokus-Kamera (16, 18) abbildet.

11. Mikroskop nach den Ansprüchen 3 und 10, **dadurch gekennzeichnet, daß** das Zwischenbild (30) zwischen der vorgeordneten Optik (29) und dem weiterem Strahlteiler (15) liegt.

12. Mikroskop nach einem der obigen Ansprüche, **dadurch gekennzeichnet, daß** der Lichtmodulator (12) mit einer anamorphotischen Optik (23) beleuchtet ist.

13. Mikroskop nach einem der obigen Ansprüche, **gekennzeichnet durch** einen Längs-Verstellmechanismus (40) zur Verstellung des Abstandes zwischen der Autofokus-Kamera (16, 18) und der Autofokus-Abbildungsoptik (29), wobei der Längs-Verstellmechanismus (40) eine Lagerückmeldung, welche den Verstellweg über ein Wegsignal anzeigt, aufweist.

14. Mikroskop nach Anspruch 13, **gekennzeichnet durch** ein Steuergerät (26), welches das Wegsignal empfängt und mittels Ansteuerung des Längs-Verstellmechanismus (40) ein Kontrastsignal der Autofokus-Kamera (16, 18) auf einen Maximalwert regelt.

15. Mikroskop nach einem der obigen Ansprüche, **dadurch gekennzeichnet, daß** ein Winkel-Verstellmechanismus vorgesehen ist, der einen Winkel zwischen der Kamera-Bildebene und der Autofokus-Bildebene verstellt, wobei der Winkel-Verstellmechanismus eine Lagerückmeldung, welche den Verstellwinkel über ein Winkelsignal anzeigt, aufweist, wobei insbesondere der Winkel-Verstellmechanismus die Kamera einstellbar kippt.

16. Mikroskop nach Anspruch 15, **gekennzeichnet durch** ein Steuergerät (26), welches das Winkelsignal empfängt und mittels Ansteuerung des Winkel-Verstellmechanismus die Autofokusauflösung einstellt.

17. Mikroskop nach einem der Ansprüche 13 bis 16, **dadurch gekennzeichnet, daß** der Verstellmechanismus einen oder mehrere der folgenden Antriebe aufweist: Spindelantrieb, Schrittmotor, Gleichstrommotor, Linearmotor, Piezosteller.

## Claims

1. A microscope comprising an objective (4), which has a focal plane located within a sample volume (2), and comprising an autofocus device, which includes
- a light modulator (12) for generating a modulation object,
- autofocus illumination optics (7; 20; 7, 28), which image the modulation object so that an image of the modulation object is formed in the sample volume (2), wherein the modulation object is imaged via a beam splitter (6, 11') which couples in the beam path of the autofocus illumination optics into the microscope beam path,
- an autofocus camera (16) for recording a two-dimensional image, said autofocus camera having a camera image plane,
- autofocus imaging optics (7; 20; 7, 28; 20, 29 ), which images the modulation object's image located in the sample volume (2) into an autofocus image plane, **characterized in that**
- the light modulator (12) is provided to generate a luminous, periodically intensity-modulated modulation object,
- the autofocus imaging optics (7, 20, 7, 28) images the luminous modulation object into the focal plane of the objective (4),
- the camera image plane intersects the autofocus image plane
- the light modulator (12) emits light or is illuminated within an autofocus spectral range other than a spectral range used for sample imaging in the microscope (1), and the autofocus imaging optics comprises at least one filter (21, 33) that suppresses or filters out spectral components located outside the autofocus spectral range.

2. The microscope as claimed in claim 1, **characterized in that** the light modulator (12) is controllable and is controlled to generate a spatially or temporally intensity-modulated modulation object, and the camera detects the contrast at this spatial or temporal modulation.

3. The microscope as claimed in any one of the above claims, **characterized in that** the autofocus illumination optics comprises a further beam splitter (15) located between the light modulator (12) and the beam splitter (6).

4. The microscope as claimed in any one of the above claims, **characterized in that** the camera image plane is at an angle of 10° to 80° to the optical axis (OA2, OA3).

5. The microscope as claimed in any one of the above claims, **characterized in that** the autofocus illumination optics (7; 20) reflects the modulation object into a top illumination beam path of the microscope.

6. The microscope as claimed in claim 5, **characterized in that** the autofocus imaging optics (20) reflects the camera (16) into the microscope beam path, said reflection being parallel to the top illumination beam path (7) of the microscope (1).

7. The microscope as claimed in any one of claims 1 to 5, **characterized in that** the beam splitter reflects the autofocus illumination or the autofocus image, respectively, parallel to a top illumination beam path (7, 8) of the microscope (1).

8. The microscope as claimed in any one of the above claims, **characterized in that** a second camera (18) is provided, whose image planes are inclined with respect to that of the first camera (16) and onto which the autofocus imaging optics also images the image of the modulation object.

9. The microscope as claimed in any one of the above claims, **characterized in that** the beam splitter (6, 11, 11') is a dichroite.

10. The microscope as claimed in any one of the above claims, **characterized in that** the autofocus imaging optics comprises optics (29) arranged preceding the camera (16) and, thus, images the image of the modulation object on the camera (16) using an intermediate image.

11. The microscope as claimed in claims 3 and 10, **characterized in that** the intermediate image (30) is located between the preceding optics (29) and the further beam splitter (15).

12. The microscope as claimed in any one of the above claims, **characterized in that** the light modulator (12) is illuminated by anamorphotic optics (23).

13. The microscope as claimed in any one of the above claims, **characterized by** a longitudinally adjusting mechanism (40) for adjusting the distance between the camera (16) and the autofocus imaging optics (29), said longitudinally adjusting mechanism (40) including position feedback indicating the adjustment path by means of a path signal.

14. The microscope as claimed in claim 13, **characterized by** a control device (26), which receives the path signal and regulates a contrast signal of the camera (16) to a maximum value by controlling the longitudinally adjusting mechanism (40).

15. The microscope as claimed in any one of the above claims, **characterized in that** an angle-adjusting mechanism is provided which adjusts an angle between the camera image plane and the imaging optics' image plane, said angle-adjusting mechanism including a position feedback indicating the angle of adjustment by means of an angle signal, wherein in particular the angle-adjusting mechanism adjustably tilts the camera.

16. The microscope as claimed in claim 15, **characterized by** a control device (26), which receives the angle signal and adjusts the autofocus resolution by controlling the angle-adjusting mechanism.

17. The microscope as claimed in any one of claims 13 to 16, **characterized in that** the adjusting mechanism comprises one or more of a spindle drive, a stepper motor, a direct current motor, a linear motor, a piezoelectric actuator.

## Revendications

1. Microscope avec un objectif (4), qui comporte un plan focal situé dans un volume d'échantillon (2), et un dispositif autofocus, lequel comporte
- un modulateur de lumière (12) pour générer un objet de modulation,
- une optique d'éclairage autofocus (7 ; 20 ; 7, 28), qui reproduit l'objet de modulation, de telle sorte qu'une image de l'objet de modulation se forme dans le volume d'échantillon (2), la reproduction de l'objet de modulation se produisant par l'intermédiaire d'un séparateur de faisceaux (6, 11, 11'), qui réfléchit la trajectoire du faisceau de l'optique d'éclairage autofocus dans la trajectoire du faisceau du microscope,
- une caméra autofocus (16, 18), qui est destinée à enregistrer une image bidimensionnelle et qui comporte un plan focal,
- une optique de reproduction autofocus (7, 20 ; 7, 28 ; 20, 29), qui reproduit l'image de l'objet de modulation, située dans le volume d'échantillon (2), dans un plan focal du dispositif autofocus,
**caractérisé en ce que**
- le modulateur de lumière (12) est réalisé pour générer un objet de modulation lumineux, bidimensionnel, modulé périodiquement en intensité,
- l'optique d'éclairage (7 ; 20 ; 7, 28) du dispositif autofocus reproduit l'objet de modulation lumineux dans le plan focal de l'objectif (4),
- le plan focal de la caméra coupe le plan focal du dispositif autofocus, et
- le modulateur de lumière (12) éclaire ou est éclairé dans une zone du spectre du dispositif autofocus, laquelle est différente d'une zone du spectre utilisée pour la reproduction de l'échantillon dans le microscope (1), et l'optique de reproduction du dispositif autofocus comporte au moins un filtre (21, 33), qui élimine ou filtre les parties du spectre situées en dehors de la zone du spectre du dispositif autofocus.

2. Microscope selon la revendication 1, **caractérisé en ce que** le modulateur de lumière (12) peut être commandé et est commandé pour générer un objet de modulation modulé en intensité dans l'espace ou dans le temps, et la caméra autofocus détecte le contraste par rapport à cette modulation dans l'espace ou dans le temps.

3. Microscope selon l'une quelconque des revendications précédentes, **caractérisé en ce que** l'optique d'éclairage du dispositif autofocus comporte un séparateur de faisceaux (15) situé entre le modulateur de lumière (12) et le séparateur de faisceaux (6).

4. Microscope selon l'une quelconque des revendications précédentes, **caractérisé en ce que** le plan focal de la caméra forme un angle de 10° à 80° avec l'axe optique (OA2, OA3).

5. Microscope selon l'une quelconque des revendications précédentes, **caractérisé en ce que** l'optique d'éclairage (7 ; 20) du dispositif autofocus réfléchit l'objet de modulation dans une trajectoire du faisceau d'éclairage à lumière incidente du microscope.

6. Microscope selon la revendication 7 **caractérisé en ce que** l'optique d'éclairage (20) du dispositif autofocus réfléchit la caméra (16, 18), parallèlement à la trajectoire du faisceau d'éclairage à lumière incidente (7) du microscope (1), dans la trajectoire du faisceau du microscope.

7. Microscope selon l'une quelconque des revendications 1 à 5, **caractérisé en ce que** le séparateur de faisceaux réfléchit l'éclairage du dispositif autofocus ou la reproduction du dispositif autofocus parallèlement à une trajectoire du faisceau d'éclairage à lumière incidente (7, 8) du microscope (1).

8. Microscope selon l'une quelconque des revendications précédentes, **caractérisé en ce qu'**il est prévu une deuxième caméra autofocus (18), dont le plan focal est incliné par rapport à celui de la première caméra autofocus (16) et sur laquelle l'optique de reproduction du dispositif autofocus reproduit également l'image de l'objet de modulation.

9. Microscope selon l'une quelconque des revendications précédentes, **caractérisé en ce que** le séparateur de faisceaux (6, 11, 11') est une dichroïte.

10. Microscope selon l'une quelconque des revendications précédentes, **caractérisé en ce que** l'optique de reproduction du dispositif autofocus comporte une optique (29), montée en amont de la caméra autofocus (16, 18), et reproduit ainsi l'image de l'objet de modulation avec une reproduction intermédiaire sur la caméra autofocus (16, 18).

11. Microscope selon les revendications 3 et 10, **caractérisé en ce que** l'image intermédiaire (30) se situe entre l'optique (29), montée en amont, et le séparateur de faisceaux (15) supplémentaire.

12. Microscope selon l'une quelconque des revendications précédentes, **caractérisé en ce que** le modulateur de lumière (12) est éclairé avec une optique (23) anamorphosique.

13. Microscope selon l'une quelconque des revendications précédentes, **caractérisé par** un mécanisme de réglage longitudinal (40) pour le réglage de la distance entre la caméra autofocus (16, 18) et l'optique de reproduction (29) du dispositif autofocus, ledit mécanisme de réglage longitudinal (40) comportant un rétrosignal de position, qui signale la distance de réglage via un signal de distance.

14. Microscope selon la revendication 13, **caractérisé par** un dispositif de commande (26), qui reçoit le signal de distance et, par la commande du mécanisme de réglage longitudinal (40), règle à une valeur maximale un signal de contraste de la caméra autofocus (16, 18).

15. Microscope selon l'une quelconque des revendications précédentes, **caractérisé en ce qu'**il est prévu un mécanisme de réglage angulaire, qui règle un angle entre le plan focal de la caméra et le plan focal du dispositif autofocus, ledit mécanisme de réglage angulaire comportant un rétrosignal de position, qui signale l'angle de réglage via un signal d'angle, sachant qu'en particulier le mécanisme de réglage angulaire bascule la caméra en vue de son réglage.

16. Microscope selon la revendication 15, **caractérisé par** un dispositif de commande (26) qui reçoit le signal d'angle et, par la commande du mécanisme de réglage angulaire, règle la résolution du dispositif autofocus.

17. Microscope selon l'une quelconque des revendications 13 à 16, **caractérisé en ce que** le mécanisme de réglage comporte un ou plusieurs des systèmes d'entraînement suivants : entraînement à broche, moteur pas à pas, moteur à courant continu, moteur linéaire, actionneur piézoélectrique.
